# FASCICULE DE BREVET EUROPEEN

(11) **EP 3 885 953 B1**
(45) Date de publication et mention de la délivrance du brevet: **16.11.2022**
(21) Numéro de dépôt: 21163941.4
(22) Date de dépôt: 22.03.2021
(51) Int. Cl.: G06F 21/55, G06F 21/62

(54) **PROCÉDÉ ET DISPOSITIF DE CONTRÔLE DYNAMIQUE, AU NIVEAU FICHIER, DE L'INTÉGRITÉ DE FICHIERS DE PROGRAMME DANS UNE MÉMOIRE PERSISTANTE D'UN ORDINATEUR, PROGRAMME D'ORDINATEUR ET ORDINATEUR L'INCORPORANT**
VERFAHREN UND VORRICHTUNG FÜR DYNAMISCHE INTEGRITÄTSSTEUERUNG VON AUSFÜHRBAREN DATEIEN IN EINEM PERSISTENTEN SPEICHER EINES RECHNERS AUF DATEIEBENEIN, COMPUTERPROGRAMM UND RECHNER DAMIT
METHOD AND DEVICE FOR DYNAMIC CONTROL, AT FILE LEVEL, OF THE INTEGRITY OF PROGRAM FILES IN A PERSISTENT MEMORY OF A COMPUTER, COMPUTER PROGRAM AND COMPUTER INCORPORATING SAME

(30) Priorité: 27.03.2020 FR 2003076
(43) Date de publication de la demande: 29.09.2021
(73) Titulaire: Bull SAS, 78340 Les Clayes-sous-Bois (FR)
(72) Inventeur: CRETI, Luc, 91430 VAUHALLAN (FR); TRONCHE, Dominique, 75017 PARIS (FR); LENOTTE, Jean-Michel, 78370 PLAISIR (FR)
(74) Mandataire: IPAZ

(56) Documents cités:
- US-A1- 2011 082 838
- US-A1- 2013 275 973
- US-A1- 2018 129 666

## Description

La présente invention se rapporte de manière générale au domaine de la sécurité informatique, et plus particulièrement au contrôle dynamique de l'intégrité d'un ensemble de fichiers dans la mémoire persistante d'un ordinateur.

Plus particulièrement, l'invention propose un procédé et un dispositif de contrôle dynamique, au niveau fichier, de l'intégrité de fichiers de programme dans une mémoire persistante d'un ordinateur, ainsi qu'un programme d'ordinateur implémentant ledit procédé, et un ordinateur incorporant ledit dispositif.

Elle trouve des applications, en particulier, dans les systèmes informatiques en offrant des solutions pour renforcer leur sécurité.

### [Art Antérieur]

De manière générale, l'intégrité des données désigne l'état de données qui, lors de leur traitement, de leur conservation ou de leur transmission, ne subissent aucune altération ou destruction volontaire ou accidentelle, et conservent un format permettant leur utilisation. En fait, l'expression « intégrité » utilisée en relation avec des données correspond à des notions légèrement différentes, selon le contexte, même si le principe général est le même, à savoir que les données ne doivent pas avoir été modifiées depuis leur création (au sens large).

La cryptographie, tout d'abord, cherche à prouver que les données ont ou n'ont pas été modifiées afin de vérifier qu'il n'y a pas eu de falsification, ce qui se fait souvent via un algorithme de hachage (« *hash function* » en anglais) qui condense le fichier en une valeur binaire unique (appelé « *digest* », qui signifie « résumé » en anglais).

En télécommunications, on souhaite pouvoir détecter et souvent corriger des modifications des données qui peuvent être le résultat d'une action malveillante mais qui résultent en général simplement d'erreurs de transmission provenant d'imperfections du canal physique de transmission comme les interférences, les trajets multiples en radiocommunications, les phénomènes d'écho, etc. Un autre exemple est celui d'un téléchargement de fichiers depuis Internet. Il existe des risques (non négligeables) qu'ils soient corrompus en raison de problèmes de qualité de la transmission des données sur le réseau, ou d'altérations dues à des virus ou autres causes. Il est donc prudent de s'assurer de l'intégrité des données en comparant une empreinte, par exemple une somme de contrôle (« checksum » en anglais) du fichier d'origine avec celle du fichier téléchargé. Il s'agit là simplement de vérifier que le fichier téléchargé est exactement le même que l'original. Par exemple, un fichier de logiciel peut contenir un malware sans que cela modifie sa taille et ses autres caractéristiques, mais il n'aura pas la même empreinte.

Dans le domaine des systèmes informatiques, ou ordinateurs au sens large, enfin, l'intégrité est un principe selon lequel un système informatique est protégé contre les dysfonctionnements, les agressions et les attaques. Le but est ici de s'assurer que le traitement effectué par le système est complet, exact, rapide et autorisé. Il existe des systèmes matériels pour le contrôle d'intégrité assurant la vérification de sommes de contrôle (« *checksum* » en anglais) lors des échanges entre des cartes électroniques (telles que les cartes réseaux), les disques durs ou les mémoires. Il existe aussi des logiciels de contrôle d'intégrité, comme Tripwire^{™} par exemple.

Par ailleurs, le concept général de la vérification d'intégrité d'un ensemble de fichiers est déjà connu.

Ainsi, par exemple, l'outil FIM (mis pour «*File Integrity Manager*» qui signifie gestionnaire d'intégrité de fichier en anglais) permet de gérer l'intégrité de nombreux fichiers. Par exemple, lorsqu'une photothèque de 3 To comprenant des centaines voire des milliers de fichiers doit être transférée d'un disque sur un autre disque, FIM permet de vérifier qu'aucun fichier n'a été endommagé ou altéré durant le transfert. FIM crée une sorte d'index de hachage de chaque fichier et enregistre leur état à un instant déterminé dans un fichier ayant l'extension *.fim.* Puis il compare les versions transférées avec celles notifiées dans ce fichier *.fim.* Ainsi, on sait clairement si, parmi ces 3 To de données, des fichiers ont été supprimés, corrompus, modifiés, copiés, renommés ou dupliqués. FIM est disponible sous licence GPLv3.

En outre, certains systèmes d'exploitation, comme Linux ou les systèmes d'exploitation comparables (« *Linux-like* »), possèdent des commandes qui permettent la création et la vérification de l'intégrité d'un système de fichiers. Par exemple, sur un système Linux, la commande *mkfs* permet de créer un système de fichiers sur un système Linux, et la commande *fsck* permet de vérifier l'intégrité des métadonnées du système de fichiers. L'intégrité des fichiers eux-mêmes n'est pas vérifiée par *fsck.* Par contre certains systèmes de fichiers tel que *zfs* sont capables de détecter des altérations d'intégrité non malveillantes des fichiers lorsque celles-ci sont dues à des erreurs du média de stockage.

Dans le domaine de la sécurité informatique, lorsqu'une attaque informatique est lancée sur un ordinateur, l'attaquant peut vouloir modifier, ajouter ou supprimer des fichiers sur l'ordinateur visé. Un des buts de ces suppressions, ajouts ou modifications est notamment de rendre l'attaque persistante, comme dans le cas des attaques de type APT (mis pour « *Advanced Persistent Threat* »*,* en anglais, qui signifie littéralement « menace persistante avancée »), ayant fait beaucoup parler d'elles.

En effet, les techniques d'attaques consistent souvent à exploiter une faille du système d'exploitation de la machine afin de lui faire exécuter des tâches non prévues. La portée d'une faille donnée peut se limiter à modifier la mémoire vive de l'ordinateur qui a été allouée au processus attaqué. Mais les modifications réalisées par l'attaquant sont alors perdues au redémarrage de la machine, et l'attaque doit être réexécutée afin de modifier de nouveau le comportement de l'ordinateur visé.

Cependant, le but de l'attaquant peut être de modifier durablement le comportement d'une machine visée, pour réaliser des tâches de vol de données sur le long terme par exemple. Dans ce cas, plutôt que de réexécuter l'attaque après chaque redémarrage de la machine, ce qui peut être complexe et d'un résultat incertain voire impossible à obtenir, l'attaquant préfère tenter de modifier des fichiers stockés dans la mémoire persistante de l'ordinateur (typiquement un disque dur), afin d'obtenir la réexécution de ses actions malveillantes lors du redémarrage de l'ordinateur, et s'éviter ainsi la peine de réaliser de nouveau l'attaque.

Afin d'atténuer les effets de ce type d'attaques, il est souhaitable de pouvoir s'assurer de l'intégrité des fichiers contenus dans la mémoire persistante d'un ordinateur et d'être capable de lancer une alarme en cas d'intrusion avérée. L'homme du métier appréciera que cette mesure de protection n'empêche pas l'attaque en elle-même de prospérer, mais protège uniquement de ses effets puisqu'elle intervient alors que l'attaque a déjà eu lieu. Il s'agit donc ici du domaine dit de la « défense en profondeur », qui vise à réduire le risque encouru lorsqu'un composant particulier de sécurité est compromis ou défaillant.

Plusieurs approches peuvent être utilisées pour tenter de garantir l'intégrité du stockage persistant d'un ordinateur en fonction du « niveau » auquel on souhaite se placer par rapport aux différentes couches matérielles et logicielles intervenant dans la mise en œuvre du stockage persistant. On peut ainsi considérer l'une des approches de la liste ordonnée suivante :
- utilisation d'un matériel de stockage à lecture seule (« *Read-Only* », en anglais) ;
- vérification d'intégrité au niveau binaire (« *bitstream* », en anglais) produit par le système de fichier ;
- vérification d'intégrité au niveau des blocs du système de fichiers ; ou,
- vérification d'intégrité au niveau fichier.

Chacune de ces approches offre une difficulté de mise en œuvre croissante par rapport à la précédente dans la liste, tout en apportant une souplesse additionnelle dans son utilisation.

Par exemple, si l'on compare les deux dernières approches de la liste, l'homme du métier peut apprécier qu'une vérification au niveau des blocs du système de fichiers détectera un faux positif si le fichier est simplement « déplacé » par le système de fichiers alors que le contenu du fichier n'a pas changé. En revanche, dans le cadre d'une vérification d'intégrité au niveau fichier, le contenu du fichier doit être pris en compte mais aussi ses métadonnées telles sa date et son heure de création ou de dernière modification, en sorte que le risque de faux-positif tel qu'exposé ci-dessus, qui est encouru avec une vérification d'intégrité au niveau des blocs, est ici écarté.

Si l'on suit une approche par vérification au niveau fichier, le nombre de paramètres à prendre en compte est conséquent, notamment en raison de la prise en compte des métadonnées associées aux fichiers à contrôler. C'est pourquoi il faut constituer une base de données de contrôle d'intégrité, recensant l'ensemble de ces paramètres pour chacun des fichiers et répertoires devant être vérifié. La constitution de cette base de données est une opération complexe. En outre, elle doit être réitérée lors de l'ajout d'un fichier afin de s'assurer que toutes les métadonnées des fichiers ont bien été prises en compte, et ce d'autant plus que de nouvelles métadonnées peuvent être apportées par de nouvelles versions des systèmes de fichiers.

Dans le contexte de l'invention, on s'intéresse principalement aux méthodes de vérification d'intégrité au niveau fichier. En effet les autres solutions de la liste donnée plus haut impliquent des contraintes dans l'exploitation de la plateforme de la machine informatique qui les rendent moins polyvalentes.

S'il est relativement aisé de développer une méthode et un dispositif pour contrôler l'intégrité des fichiers lors du démarrage de la machine (on parle alors de « vérification d'intégrité statique »), et d'interrompre ce démarrage en cas de corruption avérée, il est en revanche beaucoup plus compliqué de réaliser ces contrôles dynamiquement (on parle de « vérification d'intégrité dynamique ») lors de l'exploitation courante de la machine sans avoir à réaliser des développements complexes dans le noyau du système d'exploitation.

Le document WO 2013166126 divulgue un procédé permettant de fournir une attestation d'intégrité dynamique de la sécurité des applications d'un ou plusieurs systèmes informatiques en réseau, capable de prendre en charge différents types d'attestation d'intégrité. Il est décrit le cas d'un périphérique utilisateur qui serait infecté par une forme de menace persistante, sous la forme d'un logiciel malveillant non-détectable à ce stade par les technologies classiques (anti-virus par exemple), et alors qu'aucune signature ni liste noire n'existe déjà pour cette menace. Selon la solution décrite dans WO 2013166126, un agent de confiance de point d'extrémité surveille le processus du logiciel malveillant en cours d'exécution sur le système, effectue des contrôles d'intégrité de fichiers et de composants, notamment en vérifiant un résumé de hachage de fichier, ou signature numérique. La chaîne de certificats est vérifiée en exploitant des services de collaboration, tels que les services de collaboration et d'évaluation, pour accéder à des services intelligents de liste blanche. En cas d'échec d'une ou plusieurs de ces vérifications, une alerte fait que le processus malveillant est immédiatement placé sur une liste de surveillance. Le processus est alors surveillé en permanence par le processeur d'intégrité pour détecter les violations de règles explicites. Une fois qu'un critère de déclenchement de règle est atteint, l'agent de confiance initie une vérification d'intégrité d'image et exploite un analyseur de programmes malveillants distant. Le profil d'image généré fournit au processeur d'intégrité des événements locaux supplémentaires à surveiller pour le processus suspect. A ce stade, l'analyseur de logiciels malveillants signale les capacités détectées par l'intermédiaire de méthodes statiques et dynamiques. Le processeur d'intégrité surveille ensuite le processus suspect pour les avertissements associés et déclenche des événements tels que les alertes. En outre, selon WO 2013166126 plusieurs services d'évaluation de points d'extrémité peuvent être déployés dans le réseau pour effectuer des analyses planifiées basées sur des stratégies déterminées, afin de détecter les expositions connues.

Le document WO 2011042306 divulgue un procédé visant à réduire le risque qu'un fichier correctement sauvegardé soit écrasé par un fichier corrompu. A cet effet, il propose une surveillance d'un système de fichiers. Plus précisément, le procédé peut comprendre la surveillance du système de fichiers afin de détecter des motifs dans plusieurs opérations d'écriture qui indiquent l'activité de programmes malveillants sur le système informatique et/ou de défauts dans le système informatique. Lorsqu'un processus de sauvegarde de fichier détecte une modification dans un fichier et que, de manière conventionnelle, le fichier d'origine est copié et enregistré dans un emplacement de sauvegarde, le processus de sauvegarde utilise d'abord le mécanisme de contrôle d'intégrité pour déterminer si les données du fichier sont correctes. Par exemple, le processus peut utiliser un algorithme approprié pour générer une somme de contrôle et comparer la somme de contrôle générée à celle enregistrée dans le fichier ou l'en-tête de fichier. Si la vérification d'intégrité prouve que le fichier est intact, une copie de sauvegarde est créée et enregistrée, et toute copie de sauvegarde précédente est écrasée. S'il s'avère au contraire que le fichier n'est pas intact, aucune copie de sauvegarde n'est enregistrée et une alerte est envoyée à l'utilisateur de l'ordinateur.

Le document US2013/0275973-A1 divulgue un système virtualisé portable dans lequel un utilisateur a la possibilité de transférer son environnement de travail d'un ordinateur à un autre.

Ainsi, il existe un besoin pour de nouveaux procédé, dispositif ou système permettant un contrôle dynamique de l'intégrité d'un ensemble de fichier, de préférence pour les ordinateurs dans leur mémoire persistante.

### [Problème technique]

L'invention a donc pour but de remédier aux inconvénients de l'art antérieur. En particulier, l'invention vise à améliorer le contrôle dynamique de l'intégrité, au niveau fichier, d'un ensemble de fichiers de programme stockés dans la mémoire persistante d'un ordinateur.

Ce but est atteint grâce à une technique permettant de détecter d'éventuelles modifications apportées à l'un quelconque de l'ensemble des fichiers de programme à contrôler, et ainsi de s'assurer de l'intégrité des fichiers de programme et plus largement de la sécurité informatique d'une machine informatique au niveau fichier. On peut ainsi faire obstacle à des attaques persistantes comme les attaques de type APT mentionnées en introduction.

### [Brève description de l'invention]

A cet effet, il est proposé **un procédé de contrôle dynamique,** au niveau fichier, de l'intégrité d'un ensemble de fichiers stockés dans une mémoire persistante d'un ordinateur, ledit procédé comprenant :
- l'allocation d'un premier espace-mémoire dans la mémoire persistante de l'ordinateur, dans lequel sont stockés des fichiers dont l'intégrité doit être contrôlée ;
- l'allocation d'un second espace-mémoire dans la mémoire persistante de l'ordinateur, distinct du premier espace-mémoire ;
- le verrouillage en lecture-seule du premier espace-mémoire contenant les fichiers dont l'intégrité doit être contrôlée ;
- l'implémentation d'un mécanisme de copie-sur-écriture à l'égard des fichiers contenus dans le premier espace-mémoire, assurant la création d'une copie d'au moins un desdits fichiers dans le second espace-mémoire lorsque l'au moins un fichier est modifié et la redirection de tous les accès subséquents à l'au moins un fichier vers ladite copie de l'au moins un fichier dans le second espace-mémoire ;
- la création d'une liste, ladite liste créée correspondant à une liste dite liste noire, de fichiers du second espace-mémoire à exclure du contrôle d'intégrité, ou à une liste dite liste blanche, de fichiers du second espace-mémoire à inclure dans le contrôle d'intégrité ;
- l'inspection dynamique, à des instants prédéterminés pendant le fonctionnement de l'ordinateur, du second espace-mémoire afin d'y identifier des fichiers à l'exception des fichiers de la liste noire ou d'y identifier des fichiers de la liste blanche ;
- la détection d'une violation d'intégrité d'un fichier parmi les fichiers dont l'intégrité doit être contrôlée stocké dans le premier espace-mémoire si une copie dudit fichier est identifiée dans le second espace-mémoire ; et,
- au moins une action prédéterminée, exécutée en réponse à la détection d'une violation d'intégrité d'un fichier parmi les fichiers dont l'intégrité doit être contrôlée du premier espace-mémoire.

La copie-sur-écriture (ou COW) peut être implémentée en spécifiant que les fichiers dans le premier espace-mémoire sont en lecture seule, et que lorsque des modifications sont apportées auxdits fichiers par un processus quelconque, une exception est levée et est gérée par le noyau du système d'exploitation en allouant de la mémoire pour un second espace-mémoire et en faisant que l'objet modifié est stocké dans ledit second espace-mémoire.

Notamment lorsque cette technique est appliquée aux fichiers de programme stockés dans le premier espace-mémoire, tant que le fichier accédé n'est utilisé qu'en lecture, seul l'original existe, dans le premier espace-mémoire. Lorsqu'une écriture dans le fichier intervient, ou une modification de ses métadonnées, ou même une suppression du fichier, une copie du fichier est réalisée dans le second espace-mémoire et toutes les modifications du fichier sont redirigées vers ladite copie du fichier dans le second espace-mémoire, en sorte que la version originale dans le premier espace-mémoire cohabite avec la version modifiée dans le second espace-mémoire.

Le procédé permet d'optimiser le contrôle de l'intégrité des fichiers de programme dans la mémoire persistante de l'ordinateur, en simplifiant la détection d'anomalie, d'une part, et en diminuant les ressources nécessaires à cette détection, d'autre part. Le contrôle d'intégrité obtenu est donc un contrôle d'intégrité, au niveau fichier, qui est simple et performant.

Le procédé permet en particulier d'améliorer l'efficacité de la détection tout en diminuant les contraintes liées à cette détection. Il présente une difficulté d'implémentation relative faible, tout en offrant une souplesse d'utilisation relativement élevée. Dit autrement, l'invention permet de rompre avec le paradigme associé au choix nécessaire parmi les quatre approches pour le contrôle d'intégrité qui ont été présentées en introduction, selon lequel on doit sélectionner l'une de ces approches en réalisant un compromis entre la difficulté de mise en œuvre et la souplesse des utilisations possibles. En outre, un avantage du procédé est lié à l'absence de calculs de signatures par des fonctions de hachage pour effectuer le contrôle d'intégrité, qui sont des calculs longs et consommateurs en ressource pour les dispositifs informatiques les mettant en œuvre.

Le procédé part de l'observation que la corruption d'intégrité d'un fichier passe nécessairement par sa modification, une telle modification pouvant aussi consister en la suppression du fichier ou l'altération de ses métadonnées. Il utilise une architecture basée sur un système de fichiers comprenant un premier espace-mémoire contenant les fichiers dont l'intégrité doit être contrôlée, et sur des règles de gestion des fichiers associées d'une manière particulière et originale. En effet, d'une part les fichiers stockés dans le premier espace-mémoire ne peuvent être modifiés, étant donné que ledit premier espace-mémoire est marqué en lecture seule. Et, d'autre part, toutes les modifications (y compris les suppressions de fichiers et les modifications de métadonnées) apportées aux fichiers font l'objet d'une modification du second espace-mémoire pour y enregistrer la version ainsi modifiée des fichiers concernés.

La liste de fichier utilisée dans le cadre de la présente invention peut prendre deux formes : une liste correspondant aux fichiers du second espace-mémoire à contrôler dite « liste blanche », et une liste correspondant aux fichiers du second espace-mémoire à ne pas contrôler dite « liste noire ». Avec l'implémentation de la liste qui exclut tous les autres fichiers du second espace-mémoire à ne pas contrôler (liste dite « liste noire » au sens de la présente invention), ledit second espace-mémoire « filtré » par la liste noire ne contient que des fichiers du premier espace-mémoire ayant subi une violation d'intégrité. Dit autrement, la simple apparition dans le second espace-mémoire d'un fichier non exclu du contrôle d'intégrité par l'effet de la liste noire est le signe de la violation de l'intégrité du fichier correspondant qui est stocké dans le premier espace-mémoire. Avec l'implémentation de la liste qui comporte exclusivement les fichiers du second espace-mémoire à contrôler (liste dite « liste blanche » au sens de la présente invention), ledit second espace-mémoire « filtré » par la liste blanche ne contient que des fichiers du premier espace-mémoire ayant subi une violation d'intégrité. Dit autrement, la simple apparition dans le second espace-mémoire d'un fichier de la liste blanche est le signe de la violation de l'intégrité du fichier correspondant qui est stocké dans le premier espace-mémoire. Ainsi, l'inspection dynamique grâce à la liste créée (liste blanche ou liste noire) pourra pendant le fonctionnement de l'ordinateur et avec une consommation minimale de ressources identifier des fichiers à l'exception des fichiers de la liste noire ou identifier des fichiers de la liste blanche par exemple en implémentant un filtrage des fichiers vérifiés du second espace-mémoire sur la base des listes blanche ou liste noire.

Avantageusement, le fait que tous les fichiers contenus dans le second espace-mémoire soient soumis au contrôle d'intégrité sauf ceux qui ont explicitement été inclus dans la liste noire ou liste des fichiers à ne pas contrôler permet de garantir qu'aucune métadonnée, même non encore existante au moment de la mise en place du système, ne peut être oubliée dans le contrôle d'intégrité. Ainsi, de façon préférée, la liste créée correspond à une liste noire et l'inspection dynamique du second espace-mémoire permet d'y identifier des fichiers à l'exception des fichiers de ladite liste noire. La seule présence de tout fichier dans le second espace-mémoire à l'exclusion des fichiers de la liste noire peut être interprétée comme la détection d'une violation ou d'un risque de violation de l'intégrité d'un fichier stocké dans le premier espace-mémoire.

Avantageusement, le procédé ne nécessite pas d'itérations de construction d'une base de données associée au contrôle d'intégrité.

Les règles de contrôle peuvent être de type « liste blanche » ou « liste noire ». Ainsi, la liste créée peut correspondre à une liste blanche et l'inspection dynamique du second espace-mémoire permet d'y identifier des fichiers de ladite liste blanche. Dans ce cas, la seule présence de tout fichier dans le second espace-mémoire correspondant aux fichiers de la liste blanche peut être interprétée comme la détection d'une violation ou d'un risque de violation de l'intégrité d'un fichier stocké dans le premier espace-mémoire.

Le système améliore les performances de la phase de vérification par rapport aux techniques existantes, notamment par le fait qu'il n'a pas besoin de se préoccuper du contenu des fichiers.

Cette amélioration de performance permet de réduire l'intervalle de temps entre deux vérifications d'intégrité successives, et donc la durée entre deux itérations successives du contrôle d'intégrité, autorisant ainsi une détection plus rapide d'une éventuelle attaque.

Lorsque les fichiers à contrôler contenus dans le premier espace-mémoire contiennent chacun du code de programme, par exemple du code de programme associé à des applications de sécurité, et la liste créée, telle que la liste noire, peut être adaptée pour identifier notamment tout fichier de données créé, modifié et/ou supprimé dans le second espace-mémoire par lesdites applications de sécurité ou par d'autres applications dont les fichiers de programme sont également contenus dans le second espace-mémoire, ainsi que lesdits fichiers de programme correspondant auxdites autres applications, le cas échéant.

Dans un tel cas, la seule présence de tout fichier dans le second espace-mémoire à l'exclusion des fichiers de la liste noire peut alors être interprétée comme la détection d'une violation de l'intégrité d'un fichier stocké dans le premier espace-mémoire.

Dans un premier mode de mise en œuvre, le procédé peut comprendre le montage d'un système de fichier par superposition, avec comme répertoire inférieur ou « *lower* » le premier espace-mémoire qui contient les fichiers dont l'intégrité doit être contrôlée et qui est marqué en lecture seule, et avec comme répertoire supérieur ou « *upper* » le second espace-mémoire contenant tout fichier résultant d'une modification, d'une création ou d'une suppression des fichiers dont l'intégrité doit être contrôlée du répertoire inférieur.

Une action exécutée en réponse à la détection d'une violation d'intégrité d'un des fichiers dont l'intégrité doit être contrôlée du premier espace-mémoire peut être toute action visant à informer et/ou à corriger telle qu'une alerte, l'envoi du fichier identifié pour analyse, un blocage du système ou encore une suppression du fichier identifié. De préférence, une action exécutée en réponse à la détection d'une violation d'intégrité d'un fichier du premier espace-mémoire peut être une action corrective, visant à éliminer le fichier identifié et présumé corrompu.

Dans un mode de mise en œuvre alternatif, le procédé peut comprendre l'implémentation d'une plateforme de conteneurisation, dans laquelle chaque conteneur comprend le premier espace-mémoire en tant que calque en lecture-seule commun à tous les conteneurs utilisant la même image des fichiers dont l'intégrité doit être contrôlée, et comprend en outre le second espace-mémoire comme calque en lecture-écriture propre à chaque conteneur et qui contient toutes les modifications apportées au conteneur.

Cette mise en œuvre peut comprendre la création d'une liste de conteneurs à surveiller et, pour chaque conteneur à surveiller, la création d'une liste noire des fichiers dudit conteneur à exclure du contrôle d'intégrité. Alternativement, cette mise en œuvre peut comprendre la création d'une liste de conteneurs à surveiller et, pour chaque conteneur à surveiller, la création d'une liste blanche des fichiers dudit conteneur à inclure dans le contrôle d'intégrité.

En outre, lorsque les fichiers à contrôler contiennent chacun du code de programme associé à des applications, par exemple du code de programme associé à des applications de sécurité, la liste créée, telle que la liste noire peut être adaptée pour identifier tout fichier temporaire créé, modifié et/ou supprimé dans le second espace-mémoire par lesdites applications.

Dans un tel cas la seule présence de tout fichier dans le second espace-mémoire à l'exclusion des fichiers de la liste noire peut avantageusement être interprétée comme la détection d'une violation de l'intégrité d'un des fichiers dont l'intégrité doit être contrôlée, stocké dans le premier espace-mémoire.

Toujours dans le cas de la seconde mise en œuvre, à base de conteneurs, une action exécutée en réponse à la détection d'une violation d'intégrité d'un fichier du premier espace-mémoire peut être une action corrective comprenant le redémarrage de l'ordinateur.

Dans l'une ou l'autre des deux mises en œuvre ci-dessus, une action exécutée en réponse à la détection d'une violation d'intégrité d'un fichier du premier espace-mémoire peut être la génération d'une alerte, par exemple dans un enregistrement d'audit de sécurité destiné à un administrateur de l'ordinateur, ou un arrêt ou une mise en sécurité de l'ordinateur.

En outre, la vérification du premier répertoire peut être réalisée à intervalles de temps sensiblement réguliers, par exemple périodiquement, par exemple environ une fois par minute. La fréquence des vérifications n'est limitée que par les performances globales du procédé, et comme le procédé est relativement plus performant que les méthodes connues dans la mesure où certaines zones seulement sont contrôlées en sorte que sa mise en œuvre ne nécessite que peu de ressource, une fréquence de vérification aussi rapide que par exemple une fois par minute est envisageable. Grâce à cette fréquence des vérifications, une attaque d'intégrité peut être détectée plus rapidement et, corrélativement, les actions peuvent être engagées plus rapidement si bien que les conséquences de l'attaque peuvent être cantonnées.]

Dans **un deuxième aspect,** l'invention a également pour objet **un dispositif informatique** ayant des moyens adaptés, notamment des moyens logiciels, pour exécuter toutes les étapes du procédé selon le premier aspect ci-dessus. Il peut s'agir par exemple d'un ordinateur configuré à cet effet, par exemple, un ordinateur sur lequel s'exécute un système d'exploitation avec une système de fichiers par superposition de type *Overlayfs* ou une architecture de conteneurs de type *Docker*^{™} ou similaire, doté d'une fonctionnalité correspondante. Par ailleurs, les données nécessaires à l'inspection dynamique ainsi que la ou les listes créées, peuvent être placées dans une zone mémoire protégée par un système de contrôle d'intégrité de bas niveau. Par exemple, les données nécessaires à ladite inspection dynamique ainsi que la ou les listes créées peuvent être placées dans un espace protégé du noyau du système d'exploitation de l'ordinateur.

Un **troisième aspect** de l'invention se rapporte à **un système informatique** comprenant un dispositif selon le deuxième aspect ci-dessus. Il peut s'agir d'un ordinateur à usage général avec ses périphériques, d'un réseau d'ordinateurs et de périphériques interconnectés, d'un calculateur à hautes performances centralisé ou distribué, etc.

Dans un **quatrième et dernier aspect,** l'invention a également pour objet **un produit programme d'ordinateur** comprenant une ou plusieurs séquences d'instructions stockées sur un support de mémoire lisible par une machine comprenant un processeur, lesdites séquences d'instructions étant adaptées pour réaliser toutes les étapes du procédé selon le premier aspect de l'invention lorsque le programme est lu dans le support de mémoire et exécuté par le processeur. Il peut s'agir d'une application de gestion de stockage de fichiers, ou d'un système d'exploitation, par exemple.

D'autres caractéristiques et avantages de l'invention apparaîtront encore à la lecture de la description qui va suivre. Celle-ci est purement illustrative et doit être lue en regard des dessins annexés sur lesquels :
- la figure 1 est une représentation schématique simplifiée d'un système informatique, ou ordinateur, dans lequel des modes de mise en oeuvre du procédé peuvent être utilisés ;
- la figure 2 est un schéma simplifié d'un exemple de système de gestion de fichiers du système informatique de la figure 1 ;
- la figure 3 est un diagramme fonctionnel illustrant un premier exemple de mise en œuvre des étapes du procédé, dans le contexte d'un système de fichiers par superposition ;
- la figure 4a est un diagramme fonctionnel illustrant l'utilisant d'une « liste blanche » au sens de la présente description ;
- la figure 4b est un diagramme fonctionnel illustrant l'utilisant d'une « liste noire » au sens de la présente description ;
- la figure 5 est un diagramme d'étapes illustrant un mode de mise en œuvre du procédé un schéma illustrant une mise en œuvre du procédé dans un système informatique utilisant le concept de conteneurs virtualisés ; et,
- la figure 6 un diagramme un diagramme fonctionnel illustrant un autre exemple de mise en œuvre des étapes du procédé, dans le contexte de la conteneurisation.

Dans la description de modes de réalisation qui va suivre et dans les figures des dessins annexés, les mêmes éléments ou des éléments similaires portent les mêmes références numériques aux dessins.

### [Description de l'invention]

Tout d'abord, on va donner ci-après un ensemble de définitions pour certains éléments de langage qui sont utilisés dans la description qui suit. Sauf indication contraire, ces définitions correspondent en principe au lexique utilisé par l'homme du métier dans le domaine informatique. En tant que de besoin, par exemple en cas de nécessité d'une interprétation d'un tel élément de langage qui dévierait du sens qui lui est habituellement accordé par l'homme du métier sur la base de ses connaissances générales, la définition donnée ci-après sera prépondérante.

Un « système d'exploitation » (ou OS, mis pour « *Operating System* », en anglais) est un ensemble de programmes qui dirige l'utilisation des ressources d'une machine informatique, ou ordinateur, par des logiciels applicatifs. Des systèmes d'exploitation connus sont par exemple OS/2^{™}, UNIX^{™}, NetWare^{™}, Linux^{™} et toutes les versions du système d'exploitation Windows^{™}.

Un « socle » est un système d'exploitation configuré de manière spécifique pour un usage donné, destiné à être utilisé à de multiples reprises dans la même configuration.

Le « kernel » ou « noyau » d'un système d'exploitation est une des parties fondamentales du système d'exploitation. Il gère les ressources de l'ordinateur et permet aux différents composants - matériels et logiciels - de communiquer entre eux.

Un « programme applicatif », ou « logiciel applicatif » ou « application informatique » est un programme (logiciel) directement utilisé pour réaliser une tâche donnée.

Un « processus » est un programme (ou logiciel) en cours d'exécution. Il ne faut pas confondre un processus (aspect dynamique, exécution qui peut être suspendue, puis reprise) avec le code d'un programme exécutable (aspect statique). A un instant donné, un processus peut se trouver dans divers états. Le noyau du système d'exploitation est chargé de réguler l'exécution des processus grâce à un mécanisme nommé « ordonnanceur » (ou « *Scheduler* » en anglais).

Un « service métier » est une fonction spécifique à un domaine d'application donné, réalisée par un programme informatique (ou logiciel).

Un « périphérique » informatique est un dispositif matériel connecté à un ordinateur et qui ajoute à ce dernier des fonctionnalités. Le périphérique ne se situe pas nécessairement à l'extérieur du boitier de l'ordinateur et peut même ne pas être physiquement visible.

Un «driver système » ou simplement « driver » (« pilote » en français) est un programme informatique destiné à permettre à un autre programme (souvent un système d'exploitation) d'interagir avec un périphérique. En général, chaque périphérique a son propre pilote. De manière simpliste, le driver d'un périphérique donné est un logiciel qui enseigne au système d'exploitation comment utiliser ce périphérique. Ce logiciel est important pour pouvoir utiliser le périphérique qui lui correspond.

Dans le système d'exploitation Linux^{™}, notamment, divers fichiers spéciaux sont situés dans le répertoire /*dev.* Ces fichiers s'appellent des fichiers de périphérique ou « device Linux » ou simplement « device ». Ils se comportent différemment des fichiers ordinaires. Ils permettent le plus souvent d'interagir avec le matériel de l'ordinateur (le disque dur par exemple). Ces fichiers spéciaux constituent l'interface avec le pilote (driver) dédié à un matériel donné faisant partie du noyau Linux^{™}, pilote qui à son tour accède au matériel.

La « mémoire vive » ou mémoire RAM (de l'anglais « *Random Access Memory* ») ou DRAM (mis pour « *Dynamic RAM* ») ou SRAM (mis pour « *Static RAM* ») est un type de mémoire électronique, notamment utilisée dans les ordinateurs, pour stocker des données volatiles. Cela signifie que la mémoire perd les données qui lui ont été confiées lorsqu'on coupe son alimentation électrique ou que l'on redémarre l'ordinateur dont elle fait partie.

La « mémoire persistante » est, inversement, un espace de stockage, utilisé dans les ordinateurs, dont les données, une fois écrites, sont conservées durablement, même en cas d'arrêt de l'alimentation en énergie ou de redémarrage de l'ordinateur dont elle fait partie. Il s'agit notamment des disques durs, qu'ils soient magnétiques ou à base de composants électroniques à état solide (ou disque SSD, mis pour « *Solid-State Drive* » en anglais).

Un « répertoire » est, en informatique, un fichier spécial contenant les adresses d'autres fichiers dans un espace mémoire, que ce soit de la mémoire vive ou de la mémoire persistante. Un répertoire est symboliquement représenté par un dossier dans lequel lesdits autres fichiers sont contenus. C'est un concept utilisé par la plupart des systèmes d'exploitation.

Un « système de fichiers » ou système de gestion de fichiers (SGF), parfois aussi appelé « FS » en abrégé (mis pour « *File System* » ou « *filesystem* » en anglais), est une façon de stocker les informations et de les organiser dans des fichiers sur des mémoire de masse comme un disque dur, un disque SSD, un CD-ROM, une clé USB, une disquette, etc., permettant ainsi de conserver des quantités importantes de données ainsi que de les partager entre plusieurs programmes informatiques. Le système de fichiers offre à l'utilisateur une vue abstraite sur ses données et permet de les localiser via un chemin d'accès à partir d'un point de montage du système de fichiers. Pour l'utilisateur, un système de fichiers est vu comme une arborescence : les fichiers sont regroupés dans des répertoires. Ces répertoires contiennent soit des fichiers, soit récursivement d'autres répertoires. Il y a donc un répertoire racine et des sous-répertoires. Une telle organisation génère une hiérarchie de répertoires et de fichiers organisés en arbre.

Les « objets » d'un système de fichiers comprennent les fichiers et les répertoires pour les systèmes d'exploitation comme OS/2^{™}, UNIX^{™}, NetWare^{™} et tous les systèmes d'exploitation Windows^{™}, ainsi que les liens du système de fichiers pour le système d'exploitation UNIX^{™} et Linux^{™}.

Le « montage » d'un système de fichiers est l'opération qui permet de rendre accessible les objets du système de fichiers depuis l'arborescence des répertoires et sous-répertoires de la machine.

Le « point de montage » d'un système de fichiers est le répertoire à partir duquel les données du système de fichier sont rendues accessibles. Le nom de ce répertoire est un paramètre de l'opération de montage du système de fichiers. Lors de cette opération de montage, l'éventuel contenu du point de montage (fichiers et répertoires, et les liens sous Unix) sont masquées et remplacés par ceux du système de fichiers qui a été monté.

Dans un « système de fichier en mémoire », les fichiers sont stokés dans la mémoire vive de l'ordinateur au lieu d'être enregistrés dans une zone de stockage persistante telle qu'un disque dur magnétique ou un SSD. Lors du redémarrage de l'ordinateur, l'ensemble des fichiers conservés dans un système de fichier en mémoire sont perdus.

Un « système de fichier par superposition » (ou de type « overlay »), est un système de fichiers d'un type particulier. Le principe de fonctionnement de ce type de système de fichiers est de donner une vision virtuelle d'un « empilement » de systèmes de fichiers réels (contenant effectivement des données), les objets fournis par l'une des couches réelles prenant le pas sur les précédentes. Des implémentations connues de ce type de système de fichiers sont *overlayFS, aufs* et *unionfs.*

Un « layer» (ou calque) est une des « couches » composant un système de fichiers par superposition.

Un « conteneur » (ou « *container* » en anglais) est un ensemble de processus qui sont isolés du reste du système d'exploitation. Il s'exécute à partir d'une image distincte qui fournit tous les fichiers nécessaires à la prise en charge des processus qu'il contient. En fournissant une image qui contient toutes les dépendances d'une application, le conteneur assure la portabilité et la cohérence de l'application sur divers environnements. Parmi les nombreux systèmes de gestion de conteneurs existants, on peut citer Docker, LXC, Solaris Containers, ou encore les BSD Jails (le terme « *jail* » signifie « prison » en anglais) propres au système d'exploitation FreeBSD, sans que cette liste soit limitative.

Un « Template de conteneur », parfois aussi appelé « image », est un ensemble de fichiers permettant de créer de multiples conteneurs identiques. C'est le contenu du Template qui définit les fonctionnalités des conteneurs qui seront créés à partir ce Template.

Une « attaque » est, en informatique, l'exploitation d'une faille d'un système informatique (au niveau du système d'exploitation, d'un logiciel ou bien même de l'utilisateur) à des fins non connues par l'exploitant du système et généralement préjudiciables. Un « attaquant » est un agent ou organisation réalisant une attaque.

Une APT (mis pour « *Advanced Persistent Threat* »*,* en anglais, qui signifie littéralement « menace persistante avancée ») est un type de piratage informatique furtif et continu, souvent orchestré par des humains ciblant une entité spécifique.

La « défense en profondeur », terme emprunté à une technique militaire destinée à retarder l'ennemi, consiste à exploiter plusieurs techniques de sécurité afin de réduire le risque lorsqu'un composant particulier de sécurité est compromis ou défaillant.

On désigne par le terme « intégrité » la propriété associée aux données qui, lors de leur traitement, de leur transmission ou de leur stockage, ne subissent aucune altération ou destruction volontaire ou accidentelle, et conservent un format permettant leur utilisation.

La « vérification d'intégrité statique » est une vérification de l'intégrité d'un système de fichiers au démarrage de la machine. Inversement, la «vérification d'intégrité dynamique » est la vérification de l'intégrité du système de fichiers en cours d'utilisation de la machine.

Dans le contexte de la présente description, une « liste blanche » est une liste exhaustive des objets (répertoires et/ou fichiers) dont l'intégrité doit être contrôlée. Tout élément absent de la liste blanche n'est pas contrôlé. Inversement, et toujours dans le contexte de la présente description, une « liste noire » est une liste décrivant les fichiers ou répertoires exclus du contrôle d'intégrité. Tout élément ne figurant pas dans cette liste noire est contrôlé par défaut. L'homme du métier appréciera que, dans la littérature relative à la sécurité informatique, des listes blanches et noires sont souvent utilisées pour désigner des réalités qui peuvent varier beaucoup, selon le contexte et selon le sens donné par l'auteur de l'exposé. Ainsi, par exemple, dans certains documents de l'art antérieur, une liste noire peut être une liste de processus considérés comme malveillants, alors qu'une liste blanche est une liste d'objets considérés comme sécures. Dans d'autres documents, une liste noire est une liste de fichiers corrompus, alors qu'une liste blanche est une liste d'objets considérés comme intègres. Il est important de retenir la définition des termes « liste blanche » et « liste noire » dans le contexte de la présente description, telle que donnée au début de ce paragraphe.

En informatique, le « durcissement » (ou « *hardening* » en anglais) est le processus destiné à sécuriser un système. La démarche consiste principalement à réduire à l'indispensable les objets (logiciels, bibliothèques logicielles, outils) installés, ainsi qu'à éliminer les utilisateurs et les droits non indispensables, tout en conservant les fonctionnalités requises. Le principe sous-jacent est la réduction de la surface d'attaque possible, en considérant que tout objet installé est potentiellement une source de vulnérabilité (exploit). La réduction du nombre d'objets installés réduit donc le nombre de failles possibles, pour un système donné. Le durcissement inclut aussi la modification de certaines configurations par défaut du système d'exploitation afin d'améliorer la robustesse de ce dernier, par exemple l'utilisation d'un algorithme plus robuste que celui utilisé par défaut pour vérifier les mots de passe.

Une « action corrective » est une action qui peut être exécutée, par exemple, en réponse à la détection d'une violation d'intégrité d'un fichier, visant à éliminer le fichier corrompu. D'une manière plus générale, c'est une action visant à éliminer une faiblesse détectée dans le système informatique ou la cause d'une non-conformité afin d'en empêcher la réapparition. Une non-conformité pouvant avoir plusieurs causes, il est parfois nécessaire de combiner plusieurs actions afin d'éliminer la source d'erreur. L'on distingue une action corrective des actions suivantes : l'action préventive (qui vise à empêcher l'occurrence de la non-conformité), et l'action curative ou correction (qui vise à corriger la non-conformité et non sa cause).

On nomme « fonction de hachage » (de l'anglais « *hash function* », le terme « hash » signifiant, en anglais : pagaille, désordre, recouper et mélanger) un type de fonction qui, à partir d'une donnée fournie en entrée, calcule une empreinte numérique servant à identifier rapidement la donnée initiale. Les fonctions de hachage sont utilisées en informatique et en cryptographie notamment pour reconnaître rapidement des fichiers ou des mots de passe.

Les « données vivantes » (ou données de travail) sont les données utilisées et/ou produites par une machine, qui évoluent avec un cycle de vie rapide rendant leur évolution imprévisible. Un fichier de données, contenant de telles données vivantes, se distingue d'un fichier de programme qui contient du code programme qui n'évolue pas ou seulement rarement, en cas de remplacement du code par une version mise à jour.

La « copie-sur-écriture » (ou COW, de l'anglais « *Copy-on-Write* », également appelée « *lazy copy* » ou « *implicit sharing* ») est une technique de programmation mise en œuvre par la plupart des systèmes d'exploitation modernes permettant d'éviter les copies inutiles de gros objets, en réalisant la copie uniquement lors de la modification d'un objet. L'idée derrière ce mécanisme est que si de multiples processus appelants demandent l'accès à un fichier partagé, par exemple, on peut leur donner des pointeurs respectifs vers le même fichier dans la mémoire. Cette fiction peut être maintenue jusqu'à ce qu'un appelant modifie le fichier. À ce moment-là, une copie privée du fichier est créée, ailleurs dans la mémoire, qui appartient au processus concerné. Ceci se produit de manière transparente pour les processus appelants. L'avantage principal est que si un appelant ne fait jamais de modifications, la copie privée n'est jamais créée. Ce mécanisme utilise seulement une petite quantité d'espace de stockage supplémentaire, tout en ayant peu d'impact sur les performances du système. En outre, si une erreur entraîne la perte ou la corruption du fichier de données, on peut restaurer rapidement les données à partir du fichier d'origine.

Enfin, une « séquence binaire » (ou « *bitstream* » en anglais) est définie comme étant une suite de bits.

Maintenant que les définitions qui précèdent ont été introduites, on va exposer des exemples de mises en œuvre de l'invention.

L'utilisation d'un système informatique (ordinateur) quelconque sous-entend l'exécution d'un programme par celui-ci, c'est pourquoi toute application nécessite du matériel (HW, de l'anglais « *Hardware* »), en l'occurrence un ou plusieurs processeurs (CPU, de l'anglais « *Central Processing Unit* »)*,* de la mémoire vive (RAM) ou mémoire primaire, des périphériques d'entrée-sortie (généralement désignés par l'acronyme E/S, ou son équivalent en anglais : I/O mis pour « *Input*/*Output* »), des périphériques de stockage (mémoire persistante ou mémoire secondaire) comme des disques durs (ou HDD, de l'anglais « *Hard-disc drive* ») ou des mémoires SSD, des supports optiques comme des CD-ROM, des clés USB, etc., d'une part, et du logiciel (SW, de l'anglais « *Software* ») qui est exécuté par cet ordinateur, d'autre part. Le logiciel se décompose en deux familles, à savoir les programmes systèmes et les programmes d'application (simplement appelés « applications » ou « Apps »). Le plus important des programmes systèmes est le système d'exploitation (ou OS, de l'anglais « *Operating System* »).

Dans la présente description, et à moins qu'il ne soit spécifié autrement, on prendra l'exemple d'un système informatique fonctionnant sous le système d'exploitation Linux^{™}, qui est très proche du système d'exploitation Unix. L'homme du métier appréciera, toutefois, que ceci n'est qu'un exemple et que l'invention n'entend pas être limitée au cas particulier d'un système fonctionnant sous Linux^{™}. Au contraire, l'implémentation de modes de mise en œuvre est possible sur des systèmes informatiques fonctionnant sous d'autres OS, et est à la portée de l'homme du métier sur la base de l'enseignement technique divulgué dans la présente description.

L'ensemble du système informatique est organisé en « couches ». Chaque couche du système informatique masque les couches inférieures. Ainsi les couches supérieures sont indépendantes des couches inférieures. Le système d'exploitation est la couche logicielle qui sert d'interface entre les applications et le matériel, c'est-à-dire qu'il met à la disposition des programmes d'application, les possibilités offertes par le matériel. Le système d'exploitation masque la couche matérielle. De ce fait, une application prévue pour être exécutée sur un système d'exploitation donné est indépendante des éléments particuliers composant le matériel du système.

Les principales tâches qui relèvent du système d'exploitation sont notamment les suivantes :
- la multiprogrammation, le temps partagé et le parallélisme : les programmes en mémoire doivent se partager les ressources de calcul que constituent le(s) CPU, et l'ordonnanceur du système d'exploitation décide quel est le programme qui « à la main » à chaque instant ; cette fonction est assurée par un ordonnanceur (ou « *Scheduler* » en anglais)
- la gestion de la mémoire secondaire (ou mémoire persistante) : chaque utilisateur stocke des programmes et des données dans des fichiers confiés au système, qui sont stockés sur un périphérique de stockage. Cette fonction est assurée par le gestionnaire de système de fichier (« *filesystem manager* » en anglais, ou plus simplement « *filesystem* » par raccourci) ;
- l'exécution des commandes d'entrée/sortie reçue des applications, qui est assurée par un gestionnaire d'entrée/sortie (ou « I/O *manager* » en anglais) ;
- la gestion de la mémoire principale (ou mémoire vive), qui est assurée par une unité de gestion de la mémoire (ou MMU, de l'anglais « *Memory Management Unit* »), aussi appelé plus simplement gestionnaire de mémoire ;
- l'interprétation du langage de dialogue avec l'utilisateur, assurée par un interpréteur de commandes (ou « *shell* »), qui est un programme s'exécutant dans l'espace utilisateur et n'a pas de lien particulier avec le noyau (« *Kernel* ») du système d'exploitation. On peut avoir plusieurs Shell différents installés sur une même machine et utilisés simultanément ; et
- l'application des règles de sécurité, en particulier des droits d'accès aux fichiers : en lecture seulement (r), en lecture-écriture (rw) et le cas échéant en exécution (x) sous Linux^{™} par exemple. Cette fonction sensible relève également du noyau. Sur tout système Unix, il y a un super-utilisateur, généralement appelé « root », qui a tous les pouvoirs. Il peut accéder librement à toutes les ressources de l'ordinateur, y compris à la place d'un autre utilisateur, c'est-à-dire sous son identité. En général, du moins sur les systèmes de production, seul l'administrateur système possède le mot de passe pour lancer une session en tant que root, c'est-à-dire en mode super-utilisateur. Il existe même des systèmes sur lesquels il n'est pas autorisé de se connecter en tant que root.

Le volume des données traitées par un système informatique, notamment pour l'exécution de certaines applications informatiques à échelle industrielle, atteint couramment plusieurs téraoctets. De tels volumes de données ne peuvent pas être stockées dans la mémoire vive de l'ordinateur. En outre, un stockage à long terme, dans une mémoire persistante, est également nécessaire pour permettre de sauvegarder les données traitées ou à traiter pour une utilisation future. Le principe employé pour répondre à ce problème consiste à stocker ces données dans des périphériques de stockage sous forme de fichiers, c'est-à-dire de suites de blocs. Un bloc est la plus petite unité que le périphérique de stockage est capable de gérer. Plus précisément, ces fichiers de données sont stockés dans un ou plusieurs blocs du support du périphérique de stockage, selon la taille du fichier correspondant. Le contenu de ces blocs, qui est une simple suite de données binaires, peut être interprété selon le format de fichier comme des caractères, des nombres entiers ou flottants, des codes d'opérations machines, des adresses mémoires, etc. L'échange entre les deux types de mémoire, à savoir la mémoire vive dans laquelle les données sont traitées et ne font que transiter, d'une part, et la mémoire persistante dans laquelle les données sont stockées de manière plus durable même si cela peut n'être que temporaire, d'autre part, se fait ensuite par transfert de blocs.

On peut résumer ce qui précède en disant que les programmes applicatifs exécutés sur un ordinateur ne cessent de créer, de modifier et de détruire des fichiers de données dans la mémoire persistante de la machine, soit à des fins de traitement temporaires qui risqueraient de saturer la mémoire vive de la machine, soit simplement pour stoker de manière persistante leurs données vivantes. L'objectif d'un système de fichiers est de permettre l'accès au contenu des fichiers ainsi stockés (l'ouverture du fichier, son enregistrement sa copie ou son déplacement dans un second emplacement, ou sa suppression) à partir de leur chemin d'accès, formé d'un nom précédé d'une liste de répertoires imbriqués (voir plus bas).

Par ailleurs, la mémoire persistante d'un ordinateur a aussi, et même principalement, pour fonction de stocker les fichiers qui font partie de la « structure » de fonctionnement de la machine, c'est-à-dire les programmes systèmes, d'une part, et les logiciels applicatifs, d'autre part. Il s'agit des logiciels, plus ou moins complexes, installés en mode « résident » sur l'ordinateur en vue de fournir une palette de services, en local et/ou à travers un réseau. Les programmes systèmes sont appelés par le système d'exploitation, dont ils font partie, ou par des logiciels applicatifs le cas échéant. Les logiciels applicatifs sont lancés par un utilisateur, afin de fournir un service métier.

Les fichiers correspondant au code exécutable de ces programmes, ou fichiers de programme, sont également stockés dans la mémoire persistante sous la forme de blocs de données, avec le droit d'accès en exécution (x). Et ils sont gérés par le système de fichiers de la même façon que les fichiers de données. Par souci de clarté pour le lecteur, dans les figures des dessins et dans les parties correspondantes de la présente description, des fichiers exécutables sont notés avec un suffixe tel que « .exe », bien qu'un tel suffixe ne soit pas une pratique courante sous Linux^{™} (sans être non plus interdit, les fichiers exécutables n'ayant simplement pas d'extension spécifique sous Linux^{™}), alors que ce suffixe est propre aux systèmes d'exploitation de la famille Windows^{™}.

Par ailleurs, chaque fichier, qu'il s'agisse d'un fichier de données ou d'un fichier de programme, est décrit par des métadonnées, dont le nombre et la fonction dépendent du système d'exploitation sous-jacent. Les métadonnées les plus courantes comprennent, de manière non-limitative :
- les droits d'accès en lecture, écriture et exécution selon l'utilisateur ;
- les dates de création du fichier, de dernier accès et de modification des métadonnées, de modification des données, etc. ;
- le nom du propriétaire fichier ;
- la taille du fichier, par exemple en nombre d'octets ;
- le nombre de noms de fichiers (liens) pointant vers le fichier ;
- le nombre de blocs utilisés pour le stockage du fichier ;
- le type de fichier : fichier de données simple, lien symbolique, répertoire, driver de périphérique, fichier de programme exécutable ;
- etc.

Enfin, à chaque fichier est associé une liste de permissions, qui déterminent ce que chaque utilisateur a le droit de faire du fichier. Rappelons que les répertoires, sous Linux^{™}, sont aussi des fichiers. Il en résulte que les droits sur les répertoires (mais aussi les périphériques, etc.) fonctionnent exactement de la même façon que sur des fichiers ordinaires.

Les droits sur un fichier Linux^{™} s'attribuent sur trois « actions » différentes possibles :
- la lecture (r) : on peut par exemple lire le fichier avec un logiciel. Lorsque ce droit est alloué à un répertoire, il autorise l'accès en lecture au contenu du répertoire (la liste des fichiers présents à la racine de ce répertoire) ;
- l'écriture (w) : on peut modifier le fichier et le vider de son contenu. Lorsque ce droit est alloué à un répertoire, il autorise la création, la suppression et le changement de nom des fichiers qu'il contient, quels que soient les droits d'accès des fichiers de ce répertoire (même s'ils ne possèdent pas eux-mêmes le droit en écriture) ; et,
- l'exécution (x) : on peut exécuter le fichier s'il est prévu pour, c'est-à-dire si c'est un fichier exécutable. Lorsque ce droit est attribué à un répertoire, il autorise l'accès (ou ouverture) au répertoire. On appelle parfois r, w et x des « drapeaux » (ou « *flags* ») en anglais). Sur un fichier donné, ces trois drapeaux doivent être définis pour son propriétaire, son groupe, mais aussi pour les autres utilisateurs (différents du propriétaire et n'appartenant pas au groupe). En général, seuls le super-utilisateur (root) et le propriétaire d'un fichier peuvent changer ses permissions d'accès.

Les codes u, g et o (u comme « *user* »*,* g comme « *group* » et o comme « *others* ») sont utilisés par les commandes Linux^{™} pour attribuer les droits et l'appartenance des fichiers à différentes entités, qui peuvent être le propriétaire, le groupe et les autres utilisateurs, respectivement. Du point de vue de la représentation, l'ensemble des trois droits pour trois entités se représente généralement de la façon suivante : on écrit côte à côte les droits r, w puis x respectivement pour le propriétaire (u), le groupe (g) et les autres utilisateurs (o), successivement. Lorsqu'un drapeau est attribué à une entité, on écrit ce drapeau (r, w ou x), et lorsqu'il n'est pas attribué, on écrit un tiret ('-') à la place.

La problématique de l'intégrité des données vivantes, c'est-à-dire des fichiers de données, se traite de manière très différente de la problématique de l'intégrité du code, c'est-à-dire des fichiers de programme. En effet, les programmes applicatifs ont un cycle de vie (installation, mises à jour, désinstallation) relativement long alors que les données vivantes sont modifiées quasiment en continu.

C'est pourquoi les modes de mise en œuvre décrits dans le présent exposé ne couvrent que le contrôle de l'intégrité des fichiers de programme.

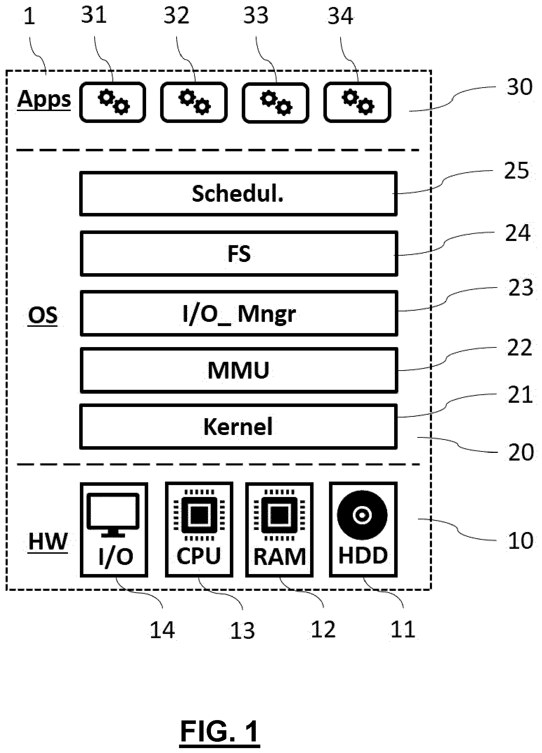

En référence au schéma fonctionnel de la **figure 1****,** on va maintenant décrire l'architecture très simplifiée d'un ordinateur selon le modèle en couches déjà évoqué plus haut.

Le système informatique ou l'ordinateur 1 tel que représenté comprend des éléments composant le matériel 10, surmonté du système d'exploitation 20, sur lequel s'exécutent des programmes applicatifs 31 à 34 dans la couche d'application 30. Ces programmes applicatifs peut être lancés par un ou plusieurs utilisateurs ayant ouvert une session de travail sur le système informatique 1. Ils peuvent être lancés automatiquement au démarrage sans ouverture de session de travail. Une interaction avec un utilisateur humain n'est pas toujours nécessaire. De tel programmes applicatifs rendent des services métiers à des utilisateurs. Il peut s'agir respectivement, par exemple d'un logiciel traitement de texte, d'un tableur, d'un navigateur Internet, d'un logiciel de gestion de base de données, d'un simulateur dans le domaine du calcul scientifique, etc.

Le matériel 10 comprend, dans l'exemple représenté :
- des supports ou périphériques de stockage persistant 11, comme un ou plusieurs disques durs (HDD), un ou plusieurs lecteurs/graveurs de CD-ROM, un ou plusieurs disques SSD, une ou plusieurs clés USB, etc. ;
- de la mémoire vive 12 ou mémoire volatile en « barrettes » de circuits intégrés (RAM), par exemple des puces mémoires en technologie NVRAM, SRAM, SDRAM, ou autre ;
- un ou plusieurs processeurs 13 en circuits intégrés (CPU), par exemple des processeurs multicœurs à usage général, des processeurs graphiques (GPU, de l'anglais « *Graphical Processing Unit* »), des processeurs dédiés à certaines tâches particulières (aussi appelés coprocesseurs), etc. ;et,
- des périphériques 14 d'entrée/sortie (I/O), par exemple un écran et un clavier, mais éventuellement aussi une souris, une imprimante, un scanner de documents, une webcam, des haut-parleurs, un casque audio, un microphone, etc.

Le système d'exploitation 20 comprend notamment les éléments logiciels représentés à la figure 1, qui sont, de bas en haut :
- le noyau (« *kernel* ») 21, qui comprend l'interpréteur de commandes (« *shell* ») et qui est chargé en outre, et entre autres tâches, de l'application des règles de sécurité, en particulier des droits d'accès aux fichiers ;
- le gestionnaire de mémoire 22, ou unité de gestion de la mémoire(MMU), qui est chargé de gérer la mémoire principale (ou mémoire vive) ;
- le gestionnaire d'entrée/sortie 23 (« I/O *manager* ») qui assure l'exécution des commandes d'entrée/sortie reçue des applications ;
- le système de fichier 24 (« *filesystem* ») qui est chargé de la gestion de la mémoire secondaire (ou mémoire persistante) sur les périphériques de stockage ; et,
- l'ordonnanceur 25 (« *Scheduler* ») qui gère la multiprogrammation, le temps partagé et le parallélisme.

Le système de fichiers 24 est la portion du système d'exploitation 20 qui s'occupe de la gestion des périphériques de stockage 11. Il prend en charge le stockage des fichiers sur le disque dur, par exemple, le rangement de ceux-ci dans des répertoires, l'ouverture ou la fermeture de fichiers/répertoires, etc.

Pour rappel, toutes les mémoires de stockage sont découpées en secteurs de taille fixe, qui possèdent tous une adresse. Les systèmes de fichiers actuels ne travaillent pas toujours sur la base des secteurs, mais utilisent des clusters, des groupes de plusieurs secteurs consécutifs. L'adresse d'un cluster est celle de son premier secteur. La taille d'un cluster dépend du système de fichiers utilisé, et peut parfois être configurée. Par exemple, Windows^{™} permet d'utiliser des tailles de clusters comprises entre 512 octets et 64 kilooctets.

Les répertoires sont organisés en une hiérarchie de répertoire : un répertoire peut contenir d'autres répertoires, et ainsi de suite. Il s'agit d'une arborescence logique, indépendante de l'implantation physique des divers sous-répertoires, qui peut s'étendre sur plusieurs partitions de la mémoire physique incluses sur un ou plusieurs disques, et même sur des disques réseaux. Cette hiérarchie commence par un répertoire maître, tout en haut de cette hiérarchie, appelé la racine (« *root* » en anglais, à ne pas confondre avec l'utilisateur root qui est administrateur du système). Sous Linux^{™}, il n'existe qu'une seule racine qui est notée par une oblique « / » (« slash » en anglais), qui est donc le sommet de la hiérarchie, et chaque partition de l'espace mémoire est un répertoire accessible depuis la racine Ces répertoires sont appelés des points de montage. L'homme du métier appréciera que les points de montages ne sont pas nécessairement directement sous la racine. Un point de montage peut même être situé dans une arborescence qui elle-même est une partition montée. Dans ce cas, l'ordre de montage des partitions revêt une importance toute particulière. Pour savoir où se trouve un fichier, en effet, une demande doit préciser quel est le chemin qu'il faut suivre, par exemple en partant du répertoire maître, *i.e.,* de la racine : on doit préciser qu'il faut ouvrir tel répertoire, puis tel autre, et ainsi de suite jusqu'au fichier désigné. Ce chemin, de la racine jusqu'au fichier, est appelé le chemin d'accès absolu. Sous Linux, les noms de répertoires sont séparés par un « / » comme dans cet exemple : /usr/ast/courrier. L'arborescence du système Linux a une structure qui est standard, avec des extensions imposées par les distributions. Quel que soit le système d'exploitation, toute modification de la structure du système de fichiers est de la compétence exclusive de l'administrateur, à l'exception des répertoires personnels situés dans /home, qui est la racine des répertoires personnels des utilisateurs.

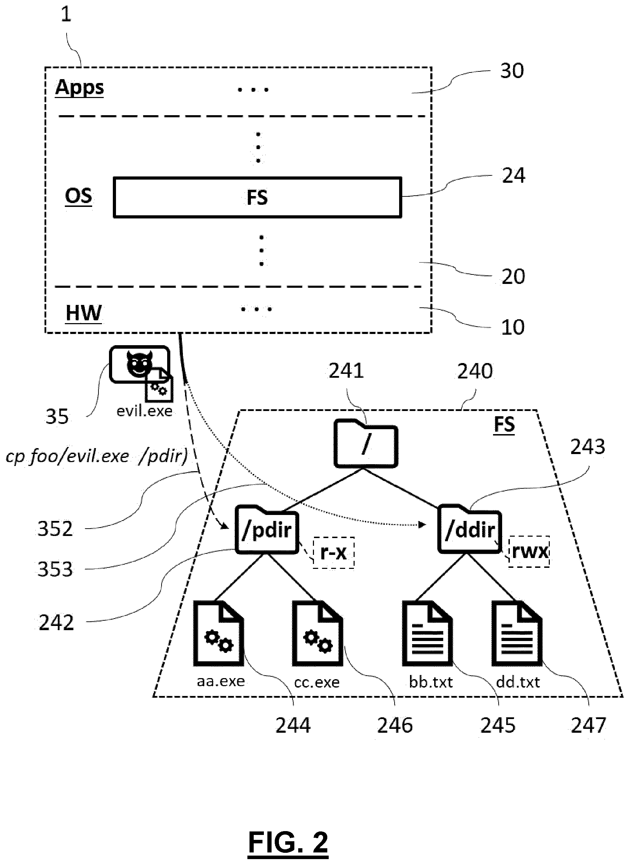

En référence à la **figure 2****,** on va maintenant exposer le principe qui est à la base du procédé de contrôle dynamique d'intégrité selon des modes de mises en œuvre de l'invention. La figure 2 montre une représentation partielle 240 de l'organisation hiérarchique du système de fichiers 24 du système d'exploitation 20 de l'ordinateur 1 de la figure 1. Afin de ne pas alourdir la figure 2, l'ordinateur 1 y est représenté de manière épurée par rapport à la représentation donnée à la figure 1. Dans cette représentation partielle 240 du système de fichiers, on a représenté, tout en haut de l'arborescence, le répertoire racine 241, reconnaissable grâce au symbole d'une barre oblique « / ». Le système de fichier ainsi représenté ne comprend que deux répertoires 242 et 243, montés chacun à partir de la racine 241.

Le premier répertoire 242 s'appelle /pdir dans cet exemple, et il a pour particularité de contenir des fichiers, par exemple des fichiers de programmes, dont l'intégrité doit être vérifiée. Il s'agit par exemple des fichiers exécutables comme les fichiers 244 et 246 représentés, ayant pour nom aa.exe et cc.exe, respectivement. On rappelle que l'extension .exe donnée ici aux noms des fichiers exécutables n'est pas une mesure commune sous Linux^{™} mais est adoptée ici afin de permettre d'identifier un fichier exécutable d'un fichier de données comme un fichier de texte, par exemple. Le répertoire 242 peut aussi contenir d'autres type de fichiers, comme des fichiers de données.

Le second répertoire 243 s'appelle /ddir dans cet exemple, et il a pour particularité de ne contenir, a priori, que des fichiers de données, par exemple des fichiers de texte comme les fichiers 245 et 247 représentés, ayant pour nom bb.txt et dd.txt, respectivement. On verra plus loin que, grâce à un mécanisme de filtre par exemple par liste noire de fichiers à ne pas contrôler, le répertoire 243 peut éventuellement contenir des fichiers de programmes sans nuire à l'efficacité du procédé de contrôle dynamique de l'intégrité des fichiers de programmes du répertoire 242. Toutefois, dans un premier temps, on fait l'hypothèse qu'en raison de règles d'utilisation spécifiées le répertoire 243 ne contient en principe aucun fichier de programme.

L'homme du métier appréciera que les noms de répertoires 242 et 243, à savoir /pdir et /ddir, respectivement, sont ici des noms de fantaisie donnés pour les besoins de la présente description, afin de désigner un répertoire contenant des fichiers de programmes et un répertoire contenant (a priori que) des fichiers de données, respectivement. Toutefois, il peut aussi s'agir de répertoires standards du système d'exploitation Linux^{™}, par exemple. Sous Linux^{™}, le répertoire /pdir peut ainsi, par exemple, être le répertoire standard /bin qui contient les fichiers exécutables (en binaire) relatifs à l'initialisation du système et aux commandes "essentielles", ou bien le répertoire standard /sbin qui contient les fichiers exécutables pour l'administration du système, ou encore le répertoire standard /usr qui a pour fonction de contenir les programmes accessibles à tout utilisateur, ou bien tout sous-répertoire monté par un utilisateur à partir de ce point de montage. Le répertoire /ddir peut quant à lui être, par exemple, le répertoire standard /tmp prévu pour le stockage des fichiers temporaires, ou bien tout sous-répertoire monté par un utilisateur à partir de ce point de montage, ou encore le répertoire standard /var qui contient les données variables liées à la machine (fichiers d'impression, traces de connexions http, etc.).

Le répertoire 242 a une autre particularité. Il est verrouillé en lecture-seule (« *read-only* », en anglais). Dit autrement, on peut lire les fichiers qu'il contient, mais on ne peut pas écrire dans ce répertoire, ce qui veut dire qu'on ne peut pas ajouter de nouveaux fichiers, ni modifier le contenu des fichiers qui s'y trouvent déjà. On ne peut pas non plus modifier ou ajouter des métadonnées aux fichiers de ce répertoire, car cela reviendrait à modifier les fichiers concernés. En bref, tous les fichiers qu'il contient peuvent être lus, mais ne peuvent pas être modifiés. Pour les systèmes fonctionnant sur un système d'exploitation gérant aussi une permission d'exécution associée aux fichiers et/ou aux répertoires contenant des fichiers, comme Linux^{™}, le marquage en lecture seule du répertoire 242 n'empêche évidemment pas l'exécution des fichiers exécutables qu'il contient. Dit autrement, le répertoire reçoit les droits
« r-x » sous Linux^{™} pour l'entité considérée (utilisateur, groupe d'utilisateurs, ou autres utilisateurs), ainsi qu'il est indiqué à la figure 2 dans une étiquette en traits discontinus attachée en bas à droite du répertoire 242. Le répertoire 243, quant à lui, n'a pas de restriction de permission d'écriture. Dit autrement, il est configuré en lecture-écriture. Dans l'exemple d'un ordinateur fonctionnant sous Linux^{™} qui est considéré ici, il possède les droits « rwx » comme indiqué à la figure 2 dans une étiquette en traits discontinus attachée en bas à droite du répertoire 243.

En outre, le système de fichiers 24 du système d'exploitation 20 implémente un mécanisme de copie-sur-écriture (ou COW, de l'anglais « *Copy-on-Write* ») à l'égard des fichiers de programme contenus dans le premier répertoire 242. Ce mécanisme est configuré pour assurer la création d'une copie d'un fichier de programme dudit premier répertoire 242 dans le second répertoire 243 uniquement, dès lors que ledit fichier fait l'objet d'une commande de modification. Dit autrement, toute tentative de modification d'un fichier du répertoire 242, d'une part n'est pas exécutée dans le répertoire 242 car il est en lecture seule comme indiqué plus haut, mais elle donne lieu à une redirection de l'opération d'écriture correspondante dans l'autre répertoire 243. Le fichier modifié est donc écrit dans le second répertoire 243, au lieu du premier répertoire 242. Cela se passe de manière transparente pour l'utilisateur et pour le processus appelant. Et cela concerne aussi bien une modification du contenu d'un fichier du répertoire 242, qu'une modification de ses métadonnées. Le répertoire 243 est donc un « calque » d'écriture initialement vide de fichiers de programme. Le mécanisme de COW est une sorte de mécanisme d'exclusion ayant pour effet de séparer les fichiers modifiés, selon qu'il s'agit fichiers de programme ou de fichiers de données.

Ce mécanisme de COW appliqué au répertoire 242 est symboliquement illustré à la figure 2. Sur cette figure, en effet, on a représenté un processus malveillant 35, qui génère une commande qui s'écrirait par exemple ainsi sous Linux : cp foo/evil.exe /pdir. Cette commande vise à copier (instruction cp) le fichier exécutable baptisé evil.exe à partir d'un répertoire quelconque (foo) dans le répertoire /pdir. Cette opération, si elle était suivie d'effet, placerait le fichier evil.exe dans le premier répertoire 242 comme indiqué par la flèche en trait discontinu 352. Cependant, cette opération n'est pas exécutée comme telle, car le mécanisme de COW lui substitue l'écriture du fichier evil.exe dans le second répertoire 243, comme indiqué par la flèche en trait pointillé 253.

L'homme du métier appréciera que le mécanisme de COW est illustré par l'exemple ci-dessus dans le cas d'une opération d'écriture d'un nouveau fichier evil.exe dans le premier répertoire 242 pour des raisons de meilleure clarté à la figure et de l'exposé, mais que le mécanisme COW opérerait également la redirection dans le second répertoire 243 d'une écriture d'une version modifiée (potentiellement corrompue) du fichier aa.exe ou du fichier cc.exe contenus dans le répertoire 242.

De même, toute commande de modification d'une ou plusieurs métadonnées d'un fichier du répertoire 242, comme les fichiers aa.exe et cc.exe, n'affecte pas le fichier d'origine dans ledit répertoire 242 qui reste donc inchangé, mais elle donne lieu à la copie d'une version modifiée dudit fichier dans le second répertoire 243. Le système de gestion de fichiers 24 est en outre configuré de manière que, par la suite, tout accès au fichier concerné s'effectue en réalité à la version modifiée telle que copiée dans le second répertoire 243.

Les modes de réalisation exploitent avantageusement cette caractéristique du mécanisme de COW, afin de proposer un mécanisme efficace de vérification de l'intégrité des fichiers du premier répertoire 242. En effet, toute modification d'un des fichiers du premier répertoire 242 est reflétée, en raison de l'application du mécanisme de COW, par la présence d'un fichier correspondant, ou fichier image, dans le second répertoire 243. Il en est ainsi aussi bien pour une modification du contenu d'un de ces fichiers, que pour une modification de ses métadonnées. Une procédure de contrôle d'intégrité des fichiers du premier répertoire 242 peut donc consister, tout simplement, à vérifier la présence éventuelle d'un tel fichier image associé à ces fichiers dans le répertoire 243. Une telle procédure de contrôle peut être initiée, par exemple, à intervalles de temps déterminés, par exemple à intervalles de temps périodiques, ou en réponse à certains événements ou certaines interruptions. Si un fichier est trouvé dans le second répertoire 243 qui correspond à l'un des fichiers du premier répertoire 242, lequel est configuré en lecture seule car les fichiers qu'il contient sont par exemple des fichiers sensibles du point de vue de la sécurité, alors cela est interprété comme signifiant que ce fichier a potentiellement été corrompu. Toute action correctrice peut alors être mise en œuvre, afin de pallier cette attaque de sécurité.

Du point de vue de l'architecture du système de fichiers, le lien logique entre le premier répertoire 242 et le second répertoire 243 peut être créé par un montage dit « montage en union » (en anglais « *union mount* ») qui, dans son acception la plus large, est un mécanisme de montage permettant de réunir plusieurs systèmes de fichiers en un seul virtuel avec généralement l'un des deux systèmes de fichier qui est monté en lecture seule, alors que le second permet un accès en écriture. L'implémentation la plus connue sous Linux^{™} en est *Unionfs,* tandis que des alternatives se nomment *Overlayfs* et *aufs.*

Les systèmes de fichiers de type « à montage en union » sont une solution pour permettre une fusion virtuelle de plusieurs dossiers, tout en gardant leur contenu réel séparé. Le système de fichiers par superposition (« *Overlayfs* », selon son appellation sous Linux^{™}) en est un exemple. L'homme du métier appréciera que, comme *Unionfs* et *Aufs, Overlayfs* est plus un mécanisme de montage qu'un système de fichiers en tant que tel.

Introduit dans la « mainline » du noyau Linux avec la version 3.18, *Overlayfs* permet de superposer le contenu (fichiers et répertoires) d'un répertoire à un autre. Les répertoires sources peuvent être sur des volumes différents et peuvent même être des systèmes de fichiers différents, ce qui crée un mécanisme intéressant pour permettre la modification temporaire de fichiers et dossiers en lecture seule. En effet, certains systèmes de fichier étant structurellement en lecture seule (l'opération d'écriture n'étant jamais possible), leur utilisation peut avoir un intérêt dans le cadre de modes de mise en œuvre de l'invention car dans ce cas le mode d'accès en lecture seule du premier répertoire 342 n'est plus simplement une composante de cette mise en œuvre, mais devient structurelle.

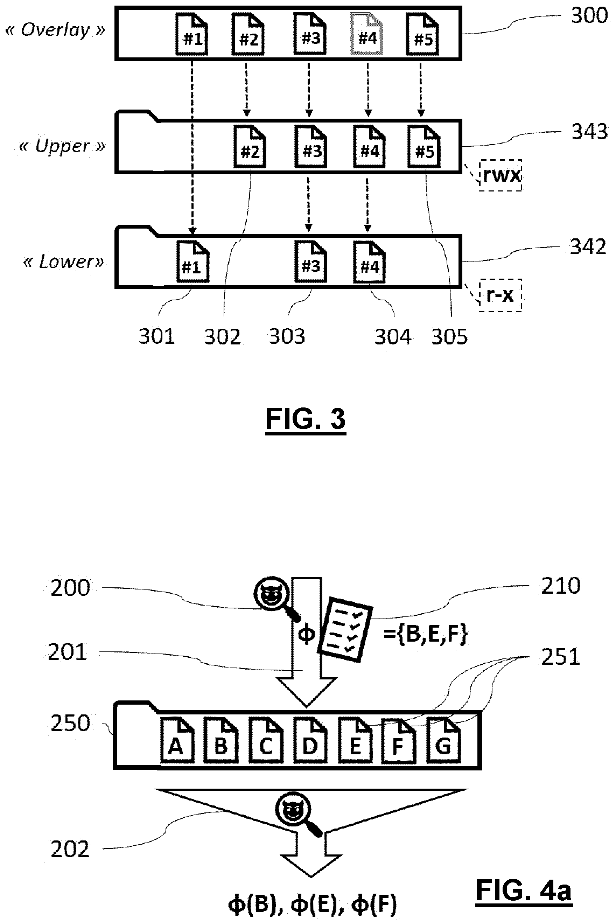

En référence à la **figure 3****,** le cas le plus simple d'un système de fichier par superposition implique deux répertoires, chacun pouvant contenir des fichiers et des répertoires, et organisées du point de vue logique en couches. Plus précisément, :
- une couche basse 342, ou répertoire inférieur (« *lower* » en anglais) qui est configuré en lecture seule ;
- une couche de plus haut niveau 343, ou répertoire supérieur (« *upper»* en anglais), qui est accessible en écriture ; et,
- une couche de superposition 300 (« *overlay layer* » ou « *merged layer* » en anglais), qui donne la présentation de l'ensemble des deux couches, avec le reste de Linux et des applications positionnées au-dessus de cela.

La couche de superposition 300 est en quelque sorte le point de montage du système de fichiers, ou plutôt du mécanisme de montage, comportant les répertoires 342 et 343. L'accès à un fichier déterminé s'effectue par le biais de la couche de superposition 300. Tout se passe comme si la couche de superposition 300 donnait la vue sur la superposition de calques correspondant chacun à l'un des répertoires 342 et 343. Une commande d'accès à un fichier 301, qui s'effectue via sa représentation dans la couche de superposition 300, récupère le fichier du répertoire supérieur 343 d'abord, ou (par défaut) du répertoire inférieur 342 si le fichier 301 n'existe pas dans le répertoire supérieur 343.

Du point de vue fonctionnel, on peut considérer le répertoire inférieur 342 et le répertoire supérieur 343 comme le premier répertoire 242 et le second répertoire 243, respectivement, du système de fichier 24 de la figure 2. Dit autrement, un mécanisme de copie-sur-écriture (COW) comme celui qui a été décrit en référence au schéma de la figure 2 existe entre le répertoire inférieur 342 et le répertoire supérieur 343. Du fait de ce mécanisme de COW, si on modifie un fichier existant dans le répertoire inférieur 342, sachant que le répertoire inférieur 342 est en lecture seule, la mise à jour du fichier est créée dans la couche supérieure 343, et c'est cette mise à jour qui sera ensuite prise en compte dans la présentation au sein de couche de superposition 300, pour tout accès au fichier en mode normal (mode « user »).

En effet, toute modification apportée à un fichier à partir du répertoire inférieur 342, comme le fichier 303 représenté, crée une copie dudit fichier dans le répertoire supérieur 343, et ce fichier copié sera la version modifiée du fichier qui sera ensuite accessible à toute commande en lecture se rapportant à ce fichier. Cela laisse le fichier 303 d'origine intact dans le répertoire inférieur 342, et disponible grâce à un accès direct audit répertoire inférieur 342 (en mode super-utilisateur), par exemple en cas de nécessité de procéder à une restauration de ce fichier 303. Le cas échéant, on peut donc remettre le système dans son état initial en supprimant le contenu du répertoire supérieur 343 (avec perte des éventuelles données utiles), ce qui permet d'ajouter de la résilience au système.

En outre, un fichier supprimé du répertoire inférieur 342, comme le répertoire 304, crée également une sorte de copie dudit fichier qui est un fichier dit « d'effacement » (« *"whiteout" file* » en anglais) dans le répertoire supérieur 343, et cette suppression a pour effet que ledit fichier d'effacement n'est plus directement accessible via la couche de superposition 300. Ceci est symbolisé, à la figure 3, par la représentation du fichier 304 en gris dans la couche de superposition 300. L'homme du métier appréciera que ce n'est pas à proprement parler une copie puisque le fichier d'effacement ne contient aucune donnée. Seul le nom (et l'emplacement relatif) du fichier sont des copies de l'original.

Par contre, les créations de nouveaux fichiers ou les modifications apportées à des fichiers qui n'existent que dans le répertoire supérieur 343, lequel est accessible en lecture-écriture, ont lieu de manière usuelle, comme pour le fichier 302 et le fichier 305 tels représentés. De tels fichiers peuvent notamment être des fichiers de données, des fichiers temporaires, etc. Ils peuvent être créés, modifiés et supprimés du répertoire supérieur 343 sans aucune particularité.

L'homme du métier appréciera que ce qui a été décrit dans ce qui précède pour des fichiers, vaut aussi pour des sous-répertoires, de la même façon. Lorsqu'un sous-répertoire du répertoire inférieur 342 est effacé, il se crée dans le répertoire supérieur 343 ce qu'on appelle un sous-répertoire « opaque » (« *opaque directory* » en anglais), qui est en quelque sorte l'équivalent d'un fichier d'effacement pour un fichier effacé de la couche inférieur 342 comme le fichier 304 représenté.

La solution selon des modes de mise en œuvre de l'invention consiste à tirer parti des caractéristiques d'un système de fichiers par superposition de type « overlayfs » sous Linux^{™}, pour fournir une solution de contrôle d'intégrité pour un ensemble de fichiers à contrôler, par exemple un ensemble de fichiers de programme. Avantageusement, le cœur du mécanisme de contrôle (overlayfs) est situé dans l'espace kernel du système d'exploitation, et non dans l'espace utilisateur (espace « *user* ») et il est donc plus difficilement altérable par un attaquant.

Comme nous l'avons vu précédemment, en utilisant un montage de type « *overlayfs* » pour contrôler l'intégrité des fichiers contenus dans un répertoire 342 utilisé comme le répertoire inférieur « *lower* » du montage, un contrôle du contenu du répertoire supérieur « *upper»* 343 suffit à déterminer les modifications apportées aux fichiers du répertoire à contrôler. A cet effet, on s'assure que le répertoire inférieur 342 est effectivement configuré avec la permission lecture-seule (« *read-only* ») en mode utilisateur normal, afin que des modifications ne puisent lui être apportées directement sauf en mode super-utilisateur, bien entendu. Le procédé consiste ensuite à réaliser un contrôle, par exemple de manière périodique, du contenu du répertoire supérieur 343 afin d'identifier des modifications qui seraient révélatrices d'une atteinte à l'intégrité des fichiers du répertoire 342 contenant les fichiers sensibles.

Dans un cas, l'apparition d'un fichier dans le répertoire supérieur 343 serait le signe de la violation de l'intégrité du répertoire inférieur 342. L'homme du métier appréciera toutefois que, en pratique, certaines modifications du contenu du répertoire supérieur 343 sont légitimes et d'autres non. Typiquement, s'agissant d'un fichier sensible contenu dans le répertoire inférieur 342 qui est un programme d'application, un accès en lecture au fichier de programme correspondant qui est contenu dans le répertoire inférieur 342 est réalisé pour l'exécution du programme, mais le fichier en tant que tel, qui contient le code de l'application, n'est en principe pas susceptible d'être modifié (du moins en exploitation courante, c'est-à-dire en mode utilisateur normal), alors que un ou plusieurs fichiers de données utilisateur et/ou un ou plusieurs fichiers temporaires relatifs à l'exécution du programme peuvent être créés dans le répertoire supérieur 343, et les données qui y sont enregistrées peuvent ensuite être modifiées à tout moment.

Une liste de sous-répertoires et/ou de fichiers du répertoire supérieur 343 qui sont des sous-répertoires et/ou des fichiers à ne pas contrôler, peut être établie auparavant, i.e., avant le contrôle, en fonction du contenu attendu pour le répertoire 343 supérieur à contrôler. Typiquement cette liste contient les chemins des répertoires et des fichiers qui ne sont pas à contrôler, par exemple des répertoires de fichiers temporaires et des fichiers de données utilisateurs.

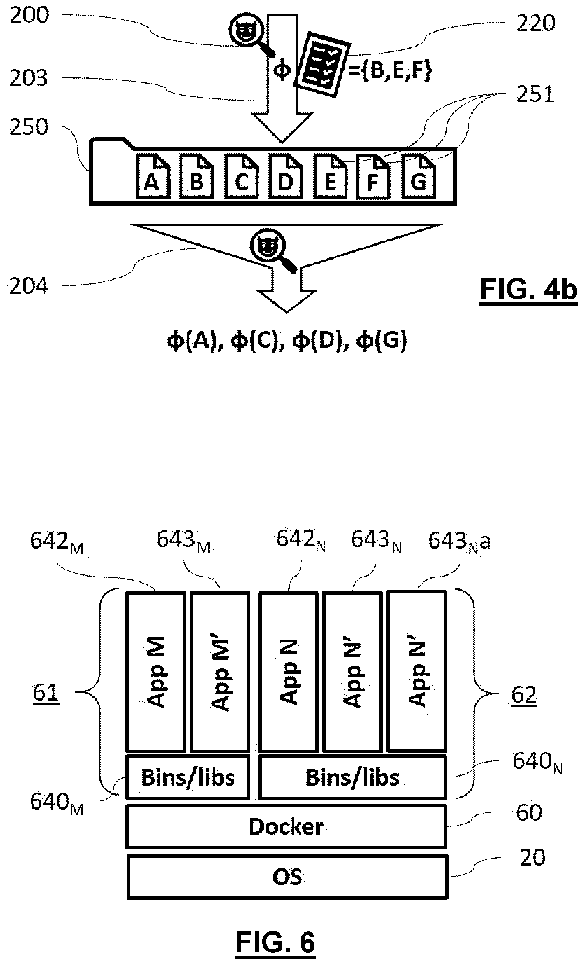

Le principe de l'utilisation d'une telle liste de fichiers à ne pas contrôler, appelée « liste noire » dans le contexte de la présente description, va être explicité en référence aux diagrammes fonctionnels de la **figure 4a** et de la **figure 4b****.** La figure 4a sera décrite et discutée en premier, car elle illustre l'utilisation d'une liste dite « liste blanche » par opposition à une liste noire selon des modes de mise en œuvre, qui serait plus intuitive pour l'homme du métier. Puis ce sera le tour de la figure 4b sur laquelle c'est le principe de la liste noire qui est illustré, de manière symétrique. Comme l'homme du métier pourra l'apprécier, le terme « liste noire » fait référence à une liste d'exclusion (ici, exclusion du contrôle) alors qu'une liste blanche serait une liste d'inclusion (en l'occurrence inclusion dans le contrôle).

Aux figures 4a et 4b, on a représenté un répertoire 250, qui pourrait être le répertoire 243 de la figure 2 ou le répertoire supérieur 343 de la figure 3. Ce répertoire contient un ensemble de fichiers 251, à savoir sept répertoires identifiés chacun par une lettre A, B, C, D, E, F ou G, respectivement, sur les figures. On peut supposer que ces lettres correspondent au nom de chacun des fichiers, respectivement. En outre, une opération 200 appliquée au contenu du répertoire 250, est également repérée par la lettre grecque Phi. Il peut s'agir d'une fonction de contrôle d'intégrité quelconque.

En référence à la figure 4a, lorsqu'elle est appliquée, à l'étape 201, aux fichiers 251 du répertoire 250 en relation avec une liste blanche 210 qui contient dans l'exemple l'identification des fichiers B, E et F, cette opération produit à l'étape 202 des résultats Phi(B), Phi(E) et Phi(F). Ces résultats correspondent à l'application de la fonction Phi aux seuls fichiers du répertoire 250 qui sont identifiés dans la liste blanche 210. Dit autrement, la fonction Phi est appliquée à tous les fichiers du répertoire qui sont listés dans la liste blanche 210. Les autres fichiers dudit répertoire 250, ne sont pas concernés par l'application de la fonction en 201. On peut se figurer les choses en considérant que la liste blanche est un filtre à travers lequel la fonction Phi est appliquée, en positif, au contenu du répertoire 250.

Inversement, et en référence cette fois à la figure 4b, lorsque la fonction Phi est appliquée, à l'étape 203, aux fichiers 251 du répertoire 250 en relation avec une liste noire 220 qui dans l'exemple contient aussi l'identification des fichiers B, E et F, cette opération produit à l'étape 204 des résultats Phi(A), Phi(C), Phi(D) et Phi(G). Ces résultats correspondent à l'application de la fonction Phi à tous les fichiers du répertoire 250 sauf ceux qui sont identifiés dans la liste noire 220. Dit autrement, les fichiers B, E et F dudit répertoire 250 qui sont identifiés dans la liste noire 220 ne sont pas concernés par l'application de la fonction en 203. On peut se figurer les choses en considérant que la liste noire 220 est un filtre, à travers lequel la fonction Phi est appliquée, en négatif, au contenu du répertoire 250.

De retour à la figure 3, un contrôle du répertoire supérieur 343 qui est appliqué audit répertoire en relation avec une liste noire listant des fichiers de données utilisateurs, de répertoires de fichiers temporaires, ou autres, est appliqué à tous les objets dudit répertoire supérieur 343 sauf ceux qui sont ainsi listés dans ladite liste noire. Comme il a déjà été dit, dans des modes de réalisation du procédé un tel contrôle peut se résumer à contrôler la présence dans le répertoire supérieur 343 de fichiers qui correspondent à des modifications apportées aux fichiers du répertoire inférieur 342. Plus généralement, le contrôle peut viser à détecter la présence d'objets dans le répertoire supérieur 343 qui trahissent des modifications apportées à des objets du répertoire inférieur 342. Appliqué en relation avec une liste noire d'objets du répertoire supérieur 343, ce contrôle laisse de côté, c'est-à-dire ignore lesdits objets du répertoire supérieur 343 listés dans ladite liste noire.

Le mécanisme de contrôle d'intégrité des fichiers de la couche inférieure 342 par identification de la présence éventuelle d'un fichier correspondant dans la couche supérieure 343 permet de détecter l'ajout de fichiers non désirées dans le répertoire supérieur s'ils ne sont pas situés dans des zones exclues du contrôle en vertu de la liste noire. Avec un tel mécanisme basé sur une liste noire, par conséquent, il n'est pas nécessaire de passer en revue un par un les fichiers devant être contrôlés car le répertoire supérieur 343 filtré par la liste noire ne contient que les modifications apportées au répertoire inférieur 342.

Comme mentionné, l'invention peut fonctionner avec l'implémentation d'une liste dite « liste blanche » correspondant à une liste de fichiers du second espace devant être contrôlés lors du contrôle d'intégrité. Dans ce contexte, le procédé selon l'invention pourrait être implémenté de façon à ce que l'inspection dynamique 55 du procédé selon l'invention corresponde à une inspection dynamique, à des instants prédéterminés pendant le fonctionnement de l'ordinateur, du second espace-mémoire afin d'y identifier une copie d'au moins un fichier inclut dans les fichiers de la liste blanche. Ensuite, comme décrit, il comporte la détection 56 d'une violation d'intégrité d'un fichier parmi les fichiers dont l'intégrité doit être contrôlée, stocké dans le premier espace-mémoire si une copie dudit fichier est identifiée dans le second espace-mémoire.

L'utilisation d'un mécanisme de contrôle en relation avec une liste noire ou une liste blanche présente de nombreux autres avantages par rapport aux mécanismes fonctionnant en relation avec une liste blanche comme ceux fournis dans des outils tels que Tripwire^{™} ou AIDE^{™}.

Le mécanisme proposé, qu'il soit basé sur une liste blanche ou une liste noire, se base uniquement sur la simple présence de fichiers dans le répertoire supérieur filtré par la liste créée. Aucun calcul de hachage (« hash ») pour calculer des empreintes des objets dont l'intégrité doit être vérifiée, ni aucun contrôle sur les métadonnées des fichiers ne sont nécessaires.

En outre, avantageusement le contrôle est basé sur une liste noire et non sur une liste blanche, cela permet de supprimer le risque d'oublier un fichier ou un répertoire des éléments devant être contrôlés puisque tous les fichiers et répertoires sont contrôlés par défaut, c'est-à-dire s'ils n'ont pas été spécifiquement inclus dans la liste noire.

Par ailleurs, un mécanisme à base de liste blanche tel qu'utilisé dans un outil comme Tripwire^{™} nécessite d'être revu à chaque mise à jour du système ou des applications contrôlées, à cause des modifications des valeurs des fichiers, de leur date ou d'autres de leurs métadonnées, qui sont reprises dans la liste blanche. Le mécanisme en relation avec une liste noire comme proposé dans les modes de réalisation n'a pas cet inconvénient, puisque la liste noire identifie les fichiers qui ne sont pas contrôlés.

La constitution d'une liste blanche ou d'une liste noire initiale est beaucoup plus aisée que la constitution de la liste blanche des systèmes de type Tripwire^{™} car elle ne nécessite pas d'avoir préinstallé un système de « référence » pour son calcul. En effet, elle ne nécessite pas de calcul de hachage (« hash ») pour constituer une empreinte de fichiers ou de valeurs de métadonnées, en vue de les comparer ultérieurement avec le produit des mêmes calculs effectués à chaque itération du mécanisme de contrôle.

En résumé, le mécanisme proposé est très simple, très performant, peu impactant en termes de ressources système et « auto-évolutif » car il ne nécessite pas de modification dans les cas où de nouvelles métadonnées doivent être prises en compte.

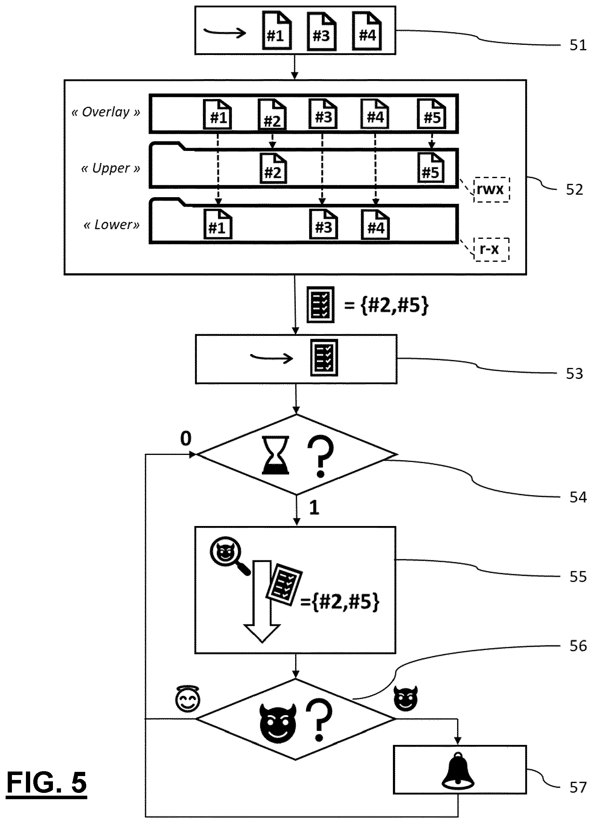

En référence maintenant au diagramme d'étapes de la **figure 5****,** on va maintenant décrire les étapes de modes de mise en œuvre du procédé de contrôle d'intégrité proposé. Ces étapes sont mises en œuvre, par exemple, au moins partiellement, par un processus du système d'exploitation qui s'exécute en toile de fond.

L'homme du métier appréciera que le mécanisme de contrôle lui-même ainsi que la liste noire, sont de préférence placés dans une zone du système d'exploitation qui est protégée par un système de contrôle d'intégrité de plus bas niveau afin de ne pas être eux-mêmes altérables.

A l'étape 51, on identifie des fichiers sensibles à soumettre à un contrôle d'intégrité selon le mécanisme. Cette étape peut être mise en œuvre, par exemple, une seule fois lors du démarrage du système informatique. Les fichiers concernés sont par exemples de fichiers de programmes correspondants à des programmes sensibles du point de vue de la sécurité du système informatique. Il peut s'agir de fichiers de programme correspondant à des applications de sécurité. Alternativement, ceux sont les fichiers non sensibles à exclure d'un contrôle d'intégrité qui pourraient être identifiés. Les fichiers concernés sont par exemples des fichiers utilisateurs modifiés fréquemment et peu sensibles du point de vue de la sécurité du système informatique.

A l'étape 52, on alloue de l'espace mémoire dans la mémoire persistante 11 (figure 1) de l'ordinateur, pour un premier répertoire qui peut être le répertoire 242 de la figure 2, par exemple. Également, on alloue de l'espace mémoire dans la mémoire persistante 11 de l'ordinateur, pour un second répertoire qui peut être le répertoire 242 de la figure 2. Les fichiers sensibles identifiés à l'étape 51 sont enregistrés dans le premier répertoire ainsi alloué éventuellement avec des fichiers non sensibles. Puis ce premier répertoire est verrouillé en lecture seule. En outre, un mécanisme de copie-sur-écriture (COW) est mis en place entre le premier répertoire et le second répertoire, de sorte que toute modification d'un fichier du premier répertoire se traduit par la copie de la version modifiée dudit fichier dans le second répertoire. Ces opérations peuvent être effectuées, sous Linux^{™}, au moyen de la fonction de montage d'un système de fichier *mount* correctement paramétrée.

En variante l'étape 52 comprend le montage d'un système de fichiers par superposition, avec un répertoire inférieur (« *lower* ») qui correspond au premier répertoire ci-dessus, et un répertoire supérieur (« *upper* » qui correspond au second répertoire ci-dessus. Plus particulièrement, cela signifie que le répertoire inférieur contient les fichiers sensibles pour lesquels le contrôle d'intégrité doit être mis en œuvre. Et il est verrouillé en lecture seule. Ce résultat peut être obtenu, sous Linux^{™}, au moyen de la fonction de montage d'un système de fichier par superposition *overlayfs* correctement paramétrée. Cette commande alloue de l'espace mémoire dans la mémoire persistante de l'ordinateur pour le premier répertoire 342 ou répertoire inférieur (« *lower* ») des modes de mise en œuvre avec un système de fichiers par superposition décrits plus haut en référence à la figure 3. La commande alloue également de l'espace mémoire pour le second répertoire 343 ou répertoire supérieur (« *upper* ») de la figure 3.

Dans l'exemple montré à la figure 5, le premier répertoire ou répertoire inférieur contient trois fichiers identifiés par leurs noms respectifs #1, #3 et #4, alors que le second répertoire ou répertoire supérieur contient deux fichiers identifiés par leurs noms respectifs #2 et #5, par exemple des fichiers de données. Dans le cas où le mécanisme de contrôle d'intégrité utilise une liste noire comme filtre utilisé pour l'inspection du second répertoire ou répertoire supérieur, cette liste noire doit identifier les zones de la mémoire persistante de l'ordinateur dans lesquelles les fichiers #2 et #5 sont stockés. On rappelle que les fichiers ainsi listés dans la liste noire sont les fichiers à ne pas contrôler.

Dans des modes de réalisation, la liste noire telle que définie ci-dessus est créée à l'étape 53. De préférence, la liste noire fait partie des données d'entrée du procédé selon l'invention, par exemple au même titre que les fichiers dont l'intégrité doit être contrôlée par l'invention.

A l'éventuelle étape 54, on se demande si un intervalle de temps déterminé s'est écoulé, afin de procéder à un contrôle d'intégrité du second répertoire ou répertoire supérieur. Si non, le procédé patiente jusqu'à ce que l'intervalle de temps déterminé soit écoulé.

Si au contraire il est déterminé à l'éventuelle étape 54 que l'intervalle de temps déterminé, par exemple soixante secondes, s'est écoulé, alors on effectue un contrôle d'intégrité du second répertoire ou répertoire supérieur à l'étape 55, en relation avec la liste créée, en particulier la liste noire. Dit autrement, tous les fichiers du second répertoire ou répertoire supérieur qui sont listés dans la liste noire sont exclus du processus de contrôle réalisé à l'étape 55. Vis-à-vis de ce processus de contrôle, tout se passe comme si lesdits fichiers étaient transparents. Alternativement, tous les fichiers du second répertoire ou répertoire supérieur qui sont listés dans la liste blanche sont inclus dans le processus de contrôle réalisé à l'étape 55. Vis-à-vis de ce processus de contrôle, tout se passe comme si les autres fichiers étaient transparents.

A l'étape 56, on détermine alors si un fichier parmi les fichiers du premier répertoire ou répertoire inférieur est susceptible d'avoir été corrompu. Comme il a déjà été exposé, ceci est détecté par la détection de la présence d'une copie d'un tel fichier dans le second répertoire ou répertoire supérieur, hormis évidemment les fichiers de la liste noire qui sont ignorés pour cette détection. Alternativement hormis les fichiers absents de la liste blanche qui sont ignorés pour cette détection. Si non, le procédé peut éventuellement reboucler sur l'étape 55 ou éventuellement le cas échéant à l'étape 54. Par exemple, dès qu'un nouvel intervalle de temps pour réaliser un contrôle d'intégrité se sera écoulé (étape 54), un nouveau contrôle sera de nouveau effectué à l'étape 55, et ainsi de suite.

Si au contraire un fichier est détecté dans le second répertoire ou répertoire supérieur à l'étape 56 alors, à l'étape 57, une action corrective appropriée est engagée. Il peut s'agir de la génération d'alerte d'un administrateur, par exemple dans un enregistrement d'audit de sécurité, afin de lui permettre de détruire le fichier corrompu et le cas échéant de restaurer la version d'origine (non corrompue) dudit fichier à partir du répertoire inférieur 242 dans lequel cette version est toujours disponible en mode super-utilisateur. En variante ou en complément, l'action corrective engagée peut aussi comprendre l'arrêt ou de la mise en sécurité du système informatique, par exemple en empêchant toute exécution du fichier exécutable corrompu.

Si une violation d'intégrité est détectée et une mesure corrective prise, c'est la même liste, e.g. liste blanche ou liste noire, qui pourra être utilisée pour l'itération suivante de la vérification.

On va maintenant décrire un autre mode de mise en œuvre, dans lequel le concept de conteneurs (ou « *Container* » en anglais) est utilisé. Les conteneurs proposent un mécanisme de regroupement logique qui permet d'extraire des applications de l'environnement dans lequel elles s'exécutent réellement. Une fois extraites, les applications basées sur des conteneurs distincts peuvent facilement être déployées dans n'importe quel environnement, qu'il s'agisse d'un centre de données privé, du cloud public ou encore de l'ordinateur personnel d'un développeur. Grâce à la mise en conteneur, chaque tâche est clairement répartie. Ainsi, les développeurs peuvent se concentrer sur la logique et les dépendances de leur application pendant que les équipes informatiques se consacrent au déploiement et à la gestion du système informatique, sans avoir à se soucier de détails tels que la version du logiciel ou la configuration spécifique à l'application.

En considérant à nouveau le schéma de la figure 1, plutôt que de virtualiser le matériel 10 comme le font les machines virtuelles (ou VM, de l'anglais « *Virtual Machine* »), les conteneurs permettent une virtualisation au niveau du système d'exploitation 20, et de nombreux conteneurs s'exécutent directement au-dessus du noyau 21 de ce système d'exploitation. Plus particulièrement, les conteneurs virtualisent le processeur 13, la mémoire 12, l'espace de stockage 11 et le cas échéant les ressources réseau au niveau du système d'exploitation 20. Ceci offre aux développeurs un aperçu « en bac à sable » du système d'exploitation 20 logiquement isolé des autres applications.

Les conteneurs sont donc extrêmement légers : ils partagent le même noyau, démarrent très rapidement et leur exécution demande très peu de mémoire comparé au lancement d'un système d'exploitation.

Il existe un certain nombre de plateformes de conteneurisation comme *Docker*^{™} , par exemple. Docker^{™} est un format de conteneurs « Open Source » très courant, et c'est pourquoi nous décrirons ci-après des modes de réalisation à partir de ce format, bien que l'homme du métier apprécie que d'autres plateformes de conteneurisation peuvent être utilisées, comme *Rocket*^{™} (dit « rkt ») le moteur de conteneurs Linux de *Core*OS^{™}, Jails^{™} et locage^{™} de FreeBSD^{™}, etc., sans sortir du cadre de l'invention. La gestion de l'espace disque du système de gestion de containers Docker est basée sur un système de type « *overlayfs* »*.*

Docker^{™} est un programme qui permet de créer des conteneurs Linux^{™} et d'y installer des environnements exploitables, appelés plus communément « images ». Le fonctionnement normal du système de fichiers dans Docker^{™} est le suivant :
- une image Docker se compose d'un ensemble de calques (« layers » en anglais) en lecture seule ; on notera qu'on parle de calques plutôt que de « répertoires », dans le contexte des conteneurs, mais la réalité est identique car il s'agit de sous-espaces de l'espace de stockage ;
- lorsqu'une image Docker est exécutée, le moteur de conteneurs de Docker^{™} (« *Docker Engine* » en anglais) crée un système de fichiers temporaire sur lequel sont stockés l'ensemble des composants et des données générées par le conteneur. Il s'appuie pour cela sur les capacités de copie-sur-écriture (COW) de l‴Union File System", par exemple, ou de tout autre système de fichiers sous-jacent qui est disponible, le cas échéant en sélectionnant l'un des systèmes de fichiers parmi une pluralité de systèmes de fichiers disponibles, cette sélection étant réalisée soit automatiquement par Docker soit par l'utilisateur. Dans la pratique, la mise en œuvre de ce mécanisme de COW signifie que lorsque la même image est instanciée à de multiples reprises sur un même hôte, le moteur de conteneurs ne crée pas une copie complète de l'image mais ne stocke que les modifications apportées par chaque image en cours d'exécution. Lorsqu'on lance un conteneur à partir d'une image, Docker ajoute au sommet de cette pile de calques un nouveau calque en lecture-écriture.

La **figure 6** montre un exemple de conteneurisation avec cinq conteneurs pour l'exécution de deux images M et N sur le système d'exploitation 20 de l'ordinateur 1 de la figure 1, par exemple, au sein de deux environnements 61 et 62 respectifs. L'image M est instanciée deux fois, dans le calque 642_{M} qui est en lecture seule, d'une part, et dans le calque 643_{M} qui est en lecture-écriture, d'autre part. L'image N est instanciée trois fois, dans le calque 642_{N} qui est en lecture seule d'une part, et dans le calque 643_{N} et dans le calque 643_{N}a qui sont en lecture-écriture, d'autre part. Pour chaque image M ou N, les conteneurs 642_{M} et 643_{M} ou les conteneurs 642_{N}, 643_{N} et 643_{N}a, respectivement, partagent des couches de binaires et de librairies 640_{M} et 640_{N}, respectivement. En outre, tous les conteneurs partagent le même système d'exploitation 20.

Le moteur de conteneurs 60 de Docker^{™} gère les modifications des fichiers au sein d'un conteneur de la manière suivante (on prend ici l'exemple de l'image M) :
- lors d'une modification de fichier, il crée une copie depuis les couches en lecture seule 640_{M} et 642_{M} vers le calque en lecture-écriture 643_{M} ;
- lors d'une création de fichier, Docker ne crée le fichier que sur le calque en lecture-écriture 643_{M}, et ne touche pas au calque en lecture seule 642_{M} ;
- lors d'une suppression de fichier, Docker ne supprime le fichier que sur le calque en lecture-écriture 643_{M}, et si il est déjà existant dans le calque en lecture seule 642_{M} alors Docker le garde dans ledit calque en lecture seule.

Le même mécanisme est reproduit si plusieurs copies du fichier sont réalisées, comme c'est le cas par exemple à la figure 6 pour l'image N qui est instanciées trois fois, dans les conteneurs 642_{N}, 643_{N} et 643_{N}a, respectivement, avec la première instance dans un calque 642_{N} en lecture seule et les deux autres instances dans des calques 643_{N} et 643_{N}a en lecture-écriture.

Comme les données dans le calque de base sont en lecture seule, elles sont protégées et laissées intactes par toutes les opérations produisant des modifications : seul le calque en lecture-écriture est impacté lors de modifications de données. Lorsqu'un conteneur est supprimé, le calque en lecture-écriture est supprimé avec. Cela signifie que toutes les modifications apportées après le lancement du conteneur disparaissent avec.

En résumé, au niveau de l'espace de stockage, chaque container est constitué de plusieurs couches ou calques : il y a une première couche ou couche inférieure configurée en lecture seule (« *read-only* ») qui est commune à tous les conteneurs utilisant la même image (c'est la couche 642_{M} pour l'image M, ou la couche 642_{N} pour l'image N) et des secondes couches ou couches supérieures en accès lecture-écriture (« *read-write* ») propres à chaque conteneur qui contiennent toutes les modifications apportées au conteneur (c'est la couche 643_{M} pour l'image M, ou les couches 643_{N} et 643_{N}a pour l'image N). Cette première couche en lecture seule 642_{M} ou 642_{N} est donc comparable au premier répertoire 242 du principe des modes de mise en œuvre de l'invention décrit plus haut en référence à la figure 2, ou au répertoire inférieur (« *lower* ») 342 des modes de mise en œuvre avec un système de fichiers par superposition décrits en référence à la figure 3. La seconde couche en lecture-écriture 643_{M} (pour l'image M) ou 643_{N} et 643_{N}a (pour l'image N) est quant à elle l'équivalent du second répertoire 243 de la figure 2, ou du répertoire supérieur (« *upper* ») 343 de la figure 3.

Un utilisateur crée entièrement une image de conteneur à l'aide de la commande de création (build) d'une plateforme de conteneurs comme Docker^{™}. Cette image est stockée dans la couche inférieure, accessible en lecture seule. Toute mise à jour de l'image est à nouveau stockée dans la couche supérieure. Pour une automatisation accrue, les couches sont décrites individuellement par l'utilisateur dans un fichier *Dockerfile,* puis assemblées en image. Une image de conteneur est donc un fichier statique non modifiable. Il renferme un code exécutable de manière à exécuter un processus isolé dans une infrastructure informatique. L'image inclut les bibliothèques et les outils système, et les autres paramètres des plateformes nécessaires à l'exécution d'un programme logiciel sur la plateforme de conteneurisation. Elle partage le noyau du système d'exploitation de la machine hôte. Une image de conteneur est construite à partir des couches du système de fichiers sur une image parente ou de base. Cette superposition de couches favorise la réutilisation des différents composants : l'utilisateur ne repart pas de zéro à chaque projet.

La couche supérieure d'un conteneur (ou layer *read-write*) est créée et détruite avec les opérations correspondantes du conteneur. De ce fait la technologie Docker^{™} impose d'identifier et de stoker les données utilisateurs dans des volumes de données séparés afin que celles-ci ne soient pas détruites à la destruction du conteneur. Cette spécificité permet d'appliquer directement le principe de l'invention à un mécanisme de contrôle d'intégrité des conteneurs Docker^{™}.

En effet dans le cadre de Docker^{™}on dispose nativement du mécanisme d'overlayfs sur lequel est basée l'invention. De plus la constitution de la liste noire se trouve facilitée puisque toutes les données « utilisateur » doivent préalablement avoir été identifiées et doivent être traitées dans des volumes de données séparés et sont donc exclues de la couche en lecture-écriture (layer *read-write*). Seules les zones de travail tels les répertoires temporaires doivent donc être décrits dans la liste noire.

La mise en œuvre de la conteneurisation comme avec la plateforme Docker^{™}permet d'avoir un système d'exploitation basé sur le déploiement d'applications embarquées dans des conteneurs Docker. Le principe fondamental d'un tel système d'exploitation basé sur Linux^{™} et Docker^{™}, par exemple, est que la charge utile c'est-à-dire l'application métier développée par l'utilisateur (un développeur par exemple) peut être entièrement déployée sous forme de conteneurs Docker^{™}.

Dans ce type de déploiement, et lorsque les applications déployées sur le matériel sont des applications de sécurité, l'implémentation de modes de mise en œuvre de l'invention procure un mécanisme efficace permettant de contrôler l'intégrité du code exécuté dans les containers Docker^{™}. Etant déployé dans une Appliance dont les ressources matérielles sont intrinsèquement limitées, l'intérêt d'un tel mécanisme provient du fait qu'il est performant, avec une faible empreinte sur la puissance de calcul.

La mise en œuvre du mécanisme de contrôle d'intégrité dans le contexte d'un système informatique utilisant le concept de la conteneurisation consiste à exécuter régulièrement, par exemple périodiquement (e.g., une fois par minute c'est-à-dire une fois toutes les 60 secondes), et par exemple à l'aide du service *cron* du système d'exploitation, une application développée à cet effet. Les paramètres de cette application sont :
- sa fréquence d'exécution ;
- la liste des conteneurs Docker^{™} à surveiller ; et,
- pour chaque conteneur à surveiller une liste noire des fichiers (et/ou répertoires, sachant que dans Linux^{™} un répertoire est un fichier) dudit conteneur à exclure du contrôle d'intégrité.

A chaque exécution de l'application, et pour chaque conteneur présent dans sa liste de conteneurs à surveiller, l'application identifie la localisation du layer *read-write* du conteneur courant.

L'application identifie les éventuels fichiers et/ou répertoires situés dans cet emplacement, en excluant de la recherche les éléments mentionnés dans la liste noire.

Si un ou plusieurs fichiers ou répertoires sont détectés lors de cette opération, cela est interprété comme signifiant que l'intégrité du code a été altérée.

Dans ce cas, un enregistrement d'audit de sécurité peut être généré afin de notifier l'alerte, et le système peut être redémarré automatiquement, ou tout autre action corrective appropriée peut être lancée.

Dans un mode de mise en œuvre, le système d'exploitation peut être configuré de manière que le redémarrage de l'ordinateur force la recréation de tous les conteneurs Docker^{™}, supprimant ainsi les modifications indues car le layer *read-write* est supprimé et recréé lors de l'opération.

Au prix d'une adaptation minime du système d'exploitation, la mise en œuvre de l'invention dans le cadre de l'implémentation de conteneurs apporte donc une haute résilience aux modifications illégitimes puisque le système se répare automatiquement (moyennant une interruption de service), par suite du redémarrage de l'Appliance.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Dans les revendications, le terme "comprendre" ou "comporter" n'exclut pas d'autres éléments ou d'autres étapes. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Procédé de contrôle dynamique, au niveau fichier, de l'intégrité d'un ensemble de fichiers stockés dans une mémoire persistante (11) d'un ordinateur (1), ledit procédé comprenant :
- l'allocation (52) d'un premier espace-mémoire (242,342,642_{M}, 642_{N}) dans la mémoire persistante (11) de l'ordinateur (1), dans lequel sont stockés des fichiers (251,301,303,304) dont l'intégrité doit être contrôlée ;
- l'allocation (52) d'un second espace-mémoire (243,343,643_{M}, 643_{N},643_{M}a) dans la mémoire persistante de l'ordinateur, distinct du premier espace-mémoire ;
- le verrouillage en lecture-seule (52) du premier espace-mémoire contenant les fichiers (251,301,303,304) dont l'intégrité doit être contrôlée ;
- l'implémentation d'un mécanisme de copie-sur-écriture à l'égard des fichiers (251,301,303,304) contenus dans le premier espace-mémoire, assurant la création d'une copie d'au moins un desdits fichiers dans le second espace-mémoire lorsque l'au moins un fichier est modifié et la redirection de tous les accès subséquents à l'au moins un fichier vers ladite copie de l'au moins un fichier dans le second espace-mémoire,
**caractérisé en ce que** ledit procédé comprend également:
- la création (53) d'une liste, ladite liste créée correspondant à une liste dite liste noire (220), de fichiers du second espace-mémoire à exclure du contrôle d'intégrité, ou à une liste dite liste blanche, de fichiers du second espace-mémoire à inclure dans le contrôle d'intégrité ;
- l'inspection dynamique (55), à des instants prédéterminés pendant le fonctionnement de l'ordinateur, du second espace-mémoire afin d'y identifier des fichiers à l'exception des fichiers de la liste noire (220) ou d'y identifier des fichiers de la liste blanche ;
- la détection (56) d'une violation d'intégrité d'un fichier parmi les fichiers dont l'intégrité doit être contrôlée, stocké dans le premier espace-mémoire si une copie dudit fichier est identifiée dans le second espace-mémoire ; et,
- au moins une action (57) prédéterminée, exécutée en réponse à la détection d'une violation d'intégrité d'un fichier parmi les fichiers dont l'intégrité doit être contrôlée du premier espace-mémoire.

2. Procédé selon la revendication 1, dans lequel la liste créée correspond à une liste noire et l'inspection dynamique (55) du second espace-mémoire permet d'y identifier des fichiers à l'exception des fichiers de ladite liste noire (220).

3. Procédé selon la revendication 2, dans lequel la seule présence de tout fichier dans le second espace-mémoire à l'exclusion des fichiers de la liste noire est interprétée comme la détection d'une violation ou d'un risque de violation de l'intégrité d'un fichier stocké dans le premier espace-mémoire.

4. Procédé selon la revendication 1, dans lequel la liste créée correspond à une liste blanche et l'inspection dynamique (55) du second espace-mémoire permet d'y identifier des fichiers de ladite liste blanche.

5. Procédé selon la revendication 4, dans lequel la seule présence de tout fichier dans le second espace-mémoire correspondant aux fichiers de la liste blanche est interprétée comme la détection d'une violation ou d'un risque de violation de l'intégrité d'un fichier stocké dans le premier espace-mémoire.

6. Procédé selon l'une quelconque des revendications 1 à 5, dans lequel des fichiers dont l'intégrité doit être contrôlée (251,301,303,304) contenus dans le premier espace-mémoire contiennent du code de programme associé à des applications, par exemple du code de programme associé à des applications de sécurité, et dans lequel la liste créée peut être adaptée pour identifier notamment tout fichier de données créé, modifié et/ou supprimé dans le second espace-mémoire par lesdites applications de sécurité ou par d'autres applications dont les fichiers de programme sont également contenus dans le second espace-mémoire ainsi que lesdits fichiers de programme correspondant auxdites autres applications, le cas échéant.

7. Procédé selon l'une quelconque des revendications 1 à 6, dans lequel une action exécutée en réponse à la détection d'une violation d'intégrité d'un des fichiers dont l'intégrité doit être contrôlée du premier espace-mémoire est une action corrective, visant à éliminer le fichier identifié.

8. Procédé selon l'une quelconque des revendications 1 à 7, comprenant un montage (52) d'un système de fichier par superposition, avec comme répertoire inférieur le premier espace-mémoire qui contient les fichiers dont l'intégrité doit être contrôlée et qui est marqué en lecture seule, et avec comme répertoire supérieur le second espace-mémoire contenant tout fichier résultant d'une modification, d'une création ou d'une suppression des fichiers dont l'intégrité doit être contrôlée du répertoire inférieur.

9. Procédé selon l'une quelconque des revendications 1 à 7, comprenant l'implémentation d'une plateforme de conteneurisation, dans laquelle chaque conteneur (61,62) comprend le premier espace-mémoire en tant que calque en lecture-seule commun à tous les conteneurs utilisant la même image des fichiers dont l'intégrité doit être contrôlée, et comprend en outre le second espace-mémoire comme calque en lecture-écriture propre à chaque conteneur et qui contient toutes les modifications apportées au conteneur.

10. Procédé selon la revendication 9, comprenant la création d'une liste de conteneurs à surveiller et, pour chaque conteneur à surveiller, la création d'une liste noire des fichiers dudit conteneur à exclure du contrôle d'intégrité.

11. Procédé selon la revendication 10, dans lequel la seule présence de tout fichier temporaire crée, modifié et/ou supprimé dans le second espace-mémoire à l'exclusion des fichiers dudit conteneur à exclure du contrôle d'intégrité de la liste noire est interprétée (56) comme la détection d'une violation ou d'un risque de violation de l'intégrité d'un des fichiers dont l'intégrité doit être contrôlée, stocké dans le premier espace-mémoire.

12. Procédé selon la revendication 9, comprenant la création d'une liste de conteneurs à surveiller et, pour chaque conteneur à surveiller, la création d'une liste blanche des fichiers dudit conteneur à inclure dans le contrôle d'intégrité.

13. Dispositif (1) informatique configuré pour mettre en œuvre toutes les étapes d'un procédé selon l'une quelconque des revendications 1 à 12.

14. Dispositif (1) informatique selon la revendication 13, dans lequel les données nécessaires à l'inspection dynamique ainsi que la ou les listes créées, sont placées dans une zone mémoire protégée par un système de contrôle d'intégrité de bas niveau.

15. Ordinateur comprenant un dispositif selon l'une des revendications 13 ou 14.

16. Produit programme d'ordinateur comprenant une ou plusieurs séquences d'instructions stockées sur un support de mémoire lisible par une machine comprenant un processeur, lesdites séquences d'instructions étant adaptées pour réaliser toutes les étapes du procédé selon l'une quelconque des revendications 1 à 12 lorsque le programme est lu dans le support de mémoire et exécuté par le processeur.

## Patentansprüche

1. Verfahren zum dynamischen Prüfen der Integrität eines Satzes in einem nichtflüchtigen Speicher (11) eines Computers (1) gespeicherter Dateien auf Dateiebene, das Verfahren umfassend:
- Bereitstellen (52) eines ersten Speicherbereichs (242, 342, 642_{M}, 642_{N}) im nichtflüchtigen Speicher (11) des Computers (1), in dem auf Integrität zu prüfende Dateien (251, 301, 303, 304) gespeichert sind;
- Bereitstellen (52) eines zweiten Speicherbereichs (243, 343, 643_{M}, 643_{N}, 643_{M}a) im nichtflüchtigen Speicher des Computers, der sich von dem ersten Speicherbereich unterscheidet;
- Anwenden einer Nur-Lese-Sperre (52) auf den ersten Speicherbereich, der die auf Integrität zu prüfenden Dateien (251, 301, 303, 304) enthält;
- Implementieren eines Copy-On-Write-Verfahrens in Bezug auf die im ersten Speicherbereich enthaltenen Dateien (251, 301, 303, 304), das das Erstellen einer Kopie mindestens einer der Dateien im zweiten Speicherbereich, wenn die mindestens eine Datei geändert wird, und das Umleiten aller nachfolgenden Zugriffe auf die mindestens eine Datei zu der Kopie der mindestens einen Datei in dem zweiten Speicherbereich sicherstellt,
**dadurch gekennzeichnet, dass** das Verfahren zudem umfasst:
- Erstellen (53) einer Liste, wobei die erstellte Liste einer sogenannten schwarzen Liste (220) von von der Integritätsprüfung auszuschließenden Dateien des zweiten Speicherbereichs oder einer sogenannten weißen Liste von in die Integritätsprüfung einzubeziehenden Dateien des zweiten Speicherbereichs entspricht;
- dynamisches Inspizieren (55) des zweiten Speicherbereichs zu vorbestimmten Zeitpunkten während des Computerbetriebs, um darin, ausgenommen von Dateien der schwarzen Liste (220), Dateien zu identifizieren oder, um darin Dateien der weißen Liste zu identifizieren;
- Feststellen (56) einer Integritätsverletzung bei einer im ersten Speicherbereich gespeicherten Datei aus den auf Integrität zu prüfenden Dateien, falls eine Kopie der Datei im zweiten Speicherbereich identifiziert wird; und,
- Ausführen mindestens einer vorbestimmten Aktion (57) als Reaktion auf das Feststellen einer Integritätsverletzung bei einer der auf Integrität zu prüfenden Dateien des ersten Speicherbereichs.

2. Verfahren nach Anspruch 1, wobei die erstellte Liste einer schwarzen Liste entspricht und das dynamische Inspizieren (55) des zweiten Speicherbereichs ermöglicht, darin, ausgenommen von Dateien der schwarzen Liste (220), Dateien zu identifizieren.

3. Verfahren nach Anspruch 2, wobei, ausgenommen von Dateien der schwarzen Liste, schon das Vorhandensein einer jeglichen Datei im zweiten Speicherbereich als das Feststellen einer Verletzung oder eines Risikos einer Verletzung der Integrität einer im ersten Speicherbereich gespeicherten Datei interpretiert wird.

4. Verfahren nach Anspruch 1, wobei die erstellte Liste einer weißen Liste entspricht und das dynamische Inspizieren (55) des zweiten Speicherbereichs ermöglicht, Dateien der weißen Liste zu identifizieren.

5. Verfahren nach Anspruch 4, wobei schon das Vorhandensein einer jeglichen Datei im zweiten Speicherbereich, die den Dateien der weißen Liste entspricht, als das Feststellen einer Verletzung oder eines Risikos einer Verletzung der Integrität einer im ersten Speicherbereich gespeicherten Datei interpretiert wird.

6. Verfahren nach einem der Ansprüche 1 bis 5, wobei die auf Integrität zu prüfenden Dateien (251, 301, 303, 304), die im ersten Speicherbereich enthalten sind, mit Anwendungen verbundenen Programmcode, zum Beispiel mit Sicherheitsanwendungen verbundenen Programmcode, enthalten und wobei die erstellte Liste dazu ausgelegt sein kann, insbesondere eine jegliche Datei mit Daten, die in dem zweiten Speicherbereich durch die Sicherheitsanwendungen oder durch andere Anwendungen, deren Programmdateien ebenfalls in dem zweiten Speicherbereich enthalten sind, erstellt, modifiziert und/oder gelöscht wird, sowie gegebenenfalls die Programmdateien, die den anderen Anwendungen entsprechen, zu identifizieren.

7. Verfahren nach einem der Ansprüche 1 bis 6, wobei eine Aktion, die als Reaktion auf das Feststellen einer Integritätsverletzung bei einer der auf Integrität zu prüfenden Dateien des ersten Speicherbereichs ausgeführt wird, eine Korrekturaktion ist, die darauf abzielt, die identifizierte Datei zu entfernen.

8. Verfahren nach einem der Ansprüche 1 bis 7, umfassend ein Mounten (52) eines Dateisystems durch Overlays, bei dem der erste Speicherbereich, der die auf Integrität zu prüfenden Dateien enthält und der als Nur-Lese-Bereich markiert ist, das untere Verzeichnis und der zweite Speicherbereich, der eine jegliche Datei enthält, die aus einer Änderung, Erstellung oder Löschung der auf Integrität zu prüfenden Dateien des unteren Verzeichnisses resultiert, das obere Verzeichnis ist.

9. Verfahren nach einem der Ansprüche 1 bis 7, umfassend das Implementieren einer Plattform zum Containering, wobei jeder Container (61, 62) den ersten Speicherbereich als eine gemeinsame Nur-Lese-Schicht für alle Container umfasst, die das gleiche Speicherabbild der auf Integrität zu prüfenden Dateien verwenden, und ferner den zweiten Speicherbereich als eine Lese-Schreib-Schicht umfasst, die jedem Container eigen ist und die alle Änderungen enthält, die an dem Container vorgenommen werden.

10. Verfahren nach Anspruch 9, umfassend das Erstellen einer Liste von zu überwachenden Containern und für jeden zu überwachenden Container das Erstellen einer schwarzen Liste von von der Integritätsprüfung auszuschließenden Dateien des Containers.

11. Verfahren nach Anspruch 10, wobei schon das Vorhandensein einer jeglichen temporären Datei, die im zweiten Speicherbereich erstellt, geändert und/oder gelöscht wird, ausgenommen von von der Integritätsprüfung der schwarzen Liste auszunehmenden Dateien des Containers, als das Feststellen einer Verletzung oder eines Risikos einer Verletzung der Integrität einer der auf Integrität zu prüfenden Dateien, die im ersten Speicherbereich gespeichert ist, interpretiert (56) wird.

12. Verfahren nach Anspruch 9, umfassend das Erstellen einer Liste von zu überwachenden Containern und für jeden zu überwachenden Container das Erstellen einer weißen Liste von in die Integritätsprüfung einzubeziehenden Dateien des Containers.

13. Computervorrichtung (1), die derart konfiguriert ist, dass sie alle Schritte eines Verfahrens nach einem der Ansprüche 1 bis 12 durchführt.

14. Computervorrichtung (1) nach Anspruch 13, wobei die für das dynamische Inspizieren erforderlichen Daten sowie die erstellte(n) Liste(n) in einem Speicherbereich abgelegt werden, der durch ein Integritätsprüfungssystem der unteren Ebene geschützt wird.

15. Computer, umfassend eine Vorrichtung nach einem der Ansprüche 13 oder 14.

16. Computerprogrammprodukt, umfassend eine oder mehrere Anweisungsabfolgen, die auf einem Speichermedium gespeichert sind, das durch eine einen Prozessor umfassende Maschine lesbar ist, wobei die Anweisungsabfolgen dazu ausgelegt sind, dass alle Schritte des Verfahrens nach einem der Ansprüche 1 bis 12 umgesetzt werden, wenn das Programm aus dem Speichermedium gelesen und durch den Prozessor ausgeführt wird.

## Claims

1. A method for dynamic control, at file level, of the integrity of a set of files stored in a persistent memory (11) of a computer (1), said method comprising:
- allocating (52) a first memory space (242, 342, 642_{M},642_{N}) in the persistent memory (11) of the computer (1), in which are stored files (251,301,303,304) the integrity of which must be controlled;
- allocating (52) a second memory space (243,343,643_{M},643_{N},643_{M}a) in the persistent memory of the computer, separate from the first memory space;
- locking to read-only (52), of the first memory space containing the files (251,301,303,304) the integrity of which must be controlled;
- implementing a copy-on-write mechanism with respect to the files (251,301,303,304) contained in the first memory space, ensuring the creation of a copy of at least one of said files in the second memory space when the at least one file is modified and the redirection of all instances of subsequent access to the at least one file to said copy of the at least one file in the second memory space;
**characterized in that** said method also comprises:
- creating (53) a list, said created list corresponding to a list called denylist (220), of files from the second memory space to be excluded from the integrity control, or a list called allowlist, of files from the second memory space to be included in the integrity control;
- dynamic inspection (55), at predetermined times during the operation of the computer, of the second memory space in order to identify files therein with the exception of the files from the denylist (220) or to identify files therein from the allowlist;
- detecting (56) an integrity violation of a file from among the files the integrity of which must be controlled, stored in the first memory space, if a copy of said file is identified in the second memory space; and
- at least one predetermined action (57), executed in response to the detection of an integrity violation of a file from among the files the integrity of which must be controlled, from the first memory space.

2. The method according to claim 1, in which the list created corresponds to a denylist and the dynamic inspection (55) of the second memory space makes it possible to identify files therein, with the exception of the files of said denylist (220).

3. The method according to claim 2, in which the presence alone of any file in the second memory space with the exclusion of the files of the denylist is interpreted as the detection of a violation or of a risk of violation of the integrity of a file stored in the first memory space.

4. The method according to claim 1, in which the list created corresponds to an allowlist and the dynamic inspection (55) of the second memory space makes it possible to identify files of said allowlist therein.

5. The method according to claim 4, in which the presence alone of any file in the second memory space corresponding to the files of the allowlist is interpreted as the detection of a violation or of a risk of violation of the integrity of a file stored in the first memory space.

6. The method according to any one of claims 1 to 5, in which the files the integrity of which must be controlled (251, 301, 303, 304) contained in the first memory space contain program code associated with applications, for example program code associated with security applications, and in which the list created can be adapted in order to identify in particular any data file created, modified and/or deleted in the second memory space by said security applications or by other applications the program files of which are also contained in the second memory space, as well as said program files corresponding to said other applications, if appropriate.

7. The method according to any one of claims 1 to 6, in which an action executed in response to the detection of an integrity violation of one of the files the integrity of which must be controlled from the first memory space is a corrective action, intended to eliminate the identified file.

8. The method according to any one of claims 1 to 7, comprising mounting (52) an overlay file system, with as lower directory, the first memory space which contains the files the integrity of which must be controlled and which is marked as read-only, and with as upper directory the second memory space containing any file resulting from a modification, a creation or a deletion of the files the integrity of which must be controlled, from the lower directory.

9. The method according to any one of claims 1 to 7, comprising the implementation of a containerization platform, in which each container (61, 62) comprises the first memory space as a read-only overlay common to all the containers using the same file image the integrity of which must be controlled, and also comprises the second memory space as a read-write overlay specific to each container and which contains all the modifications introduced to the container.

10. The method according to claim 9, comprising the creation of a list of containers to be monitored, and, for each container to be monitored, the creation of a denylist of the files of said container to be excluded from the integrity control.

11. The method according to claim 10, in which the presence alone of any created, modified and/or deleted temporary file in the second memory space with the exclusion of the files of said container to be excluded from integrity control of the denylist is interpreted (56) as the detection of a violation or of a risk of violation of the integrity of one of the files the integrity of which must be controlled, stored in the first memory space.

12. The method according to claim 9, comprising the creation of a list of containers to be monitored, and, for each container to be monitored, the creation of an allowlist of the files of said container to be included in the integrity control.

13. Information technology device (1) configured to implement all the steps of a method according to any one of claims 1 to 12.

14. Information technology device (1) according to claim 13, in which the data necessary for the dynamic inspection as well as the list(s) created, are placed in a memory zone protected by a low-level integrity control system.

15. Computer comprising a device according to one of claims 13 or 14.

16. Computer program product comprising one or more sequences of instructions stored on a memory media readable by a machine comprising a processor, said sequences of instructions being suitable for carrying out all the steps of the method according to any one of claims 1 to 12 when the program is read from the memory media and executed by the processor.
